(19) Europäisches Patentamt
European Patent Office
Office européen des brevets

(11) **EP 3 232 332 B1**

(12) **EUROPEAN PATENT SPECIFICATION**

(45) Date of publication and mention
of the grant of the patent:
**19.05.2021   Bulletin 2021/20**

(21) Application number: **15868598.2**

(22) Date of filing: **08.12.2015**

(51) Int Cl.:
***G06F 13/00*** *(2006.01)*

(86) International application number:
**PCT/JP2015/006114**

(87) International publication number:
**WO 2016/092831 (16.06.2016 Gazette 2016/24)**

(54) **INFORMATION PROCESSING DEVICE, INFORMATION PROCESSING METHOD, AND RECORDING MEDIUM**

INFORMATIONSVERARBEITUNGSVORRICHTUNG, INFORMATIONSVERARBEITUNGSVERFAHREN UND AUFZEICHNUNGSMEDIUM

DISPOSITIF ET PROCÉDÉ DE TRAITEMENT D'INFORMATIONS AINSI QUE SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2014   JP 2014249058**

(43) Date of publication of application:
**18.10.2017   Bulletin 2017/42**

(73) Proprietor: **NEC Corporation**
**Tokyo 108-8001 (JP)**

(72) Inventors:
• **OGURA, Kazumine**
**Tokyo 108-8001 (JP)**
• **YAMASAKI, Yasuhiro**
**Tokyo 108-8001 (JP)**

(74) Representative: **MacDougall, Alan John Shaw et al**
**Mathys & Squire**
**The Shard**
**32 London Bridge Street**
**London SE1 9SG (GB)**

(56) References cited:
**EP-A1- 2 798 816        JP-A- 2002 342 240**
**JP-A- 2009 277 234        JP-A- 2013 187 664**
**US-A1- 2014 237 085        US-A1- 2014 237 085**

## Description

## Technical Field

The present invention relates to information communications and, in particular, to an information processing device, an information processing method, and a recording medium which communicate information via a plurality of devices.

## Background Art

In recent years, network scale is expanding. Thus, for a user's device (hereinafter, sometimes simply referred to as "user") connected to a network, time for acquiring data such as contents is increasing.

Techniques for shortening the time to acquire contents in the user's device are proposed. As such the techniques, there is known CDN (Contents Delivery Network) which alleviates local traffic concentration by arranging contents to a plurality of servers (refer to PTL 1, for example). Alternatively, as such technique, a technique of CCN (Content-Centric Networking) that is capable of acquiring contents by using cache is proposed (refer to NTL 1, for example).

The CDN arranges a plurality of servers in geographically distant locations. Then, the servers store (mirrors) contents such that a plurality of contents are arranged, and the contents are arranged in a distributed manner. A predetermined management server, when receiving a content request from a user's device, designates, as a content acquisition destination, a server closest to the user's device, geographically or in terms of the network, among the servers which stores the content. Based on the above operations, the CDN enables speedy acquisition of contents by the user's device. In this way, the management server grasps the content placement location in the CDN.

Generally, an operation of content acquisition involves an operation of searching a server which stores the content and an operation of transmitting a request for the content to the server. In IP (Internet Protocol) network, in general, a router stores a routing table indicating an output port relating to an IP address and execute route control.

On the other hand, content acquisition in the CCN is realized by using a content name. A router in the CCN stores an FIB (Forwarding Information Base) table indicating an output port relating to the content name. For example, the CCN router stores the FIB table including relation information in which when a character of head of the content name is A, Output Port is 1, and when a character of head of the content name is B, Output Port is 2, and execute the route control.

The CCN is a network constructed with router, servers, and the like. In the CCN, a device requesting a content notifies the CCN of the content name relating to the content. Then, the CCN resolves an address based on the content name and transmits address information to the device that requests the content.

Further, in the CCN, a router having a content cache function caches a relayed content when the content is relayed. Then, when receiving a request for acquisition of the cached content, the router transmits the cached content to the device that requests the content. Based on this operation, in the CCN, the content that is once cached is transmitted from a location (relay router) closer to the user than a location (server) where the content has existed. Thus, the device that requests the content can acquire the content earlier than transmission from the location where the content originally exists. In other words, the CCN can reduce the content acquisition time.

[Citation List]

[Patent Literature]

[PTL 1] Japanese Unexamined Patent Publication No. 2009-054182

[Non Patent Literature]

[NPL 1] Van Jacobson, Mark Mosko, Diana Smetters, and JJ Garcia-Luna, "Content-centric networking", Palo Alto Research Center, Whitepaper, January 30, 2007.

US 2014/237085 discloses a communication method of a content requester to provide content in a Content-Centric Network (CCN). The method is based on a content name, including generating a content request packet including an identifier indicating a content request based on a predetermined time unit to request content, transmitting the generated content request packet, and receiving segments of the content that correspond to the predetermined time unit. Also provided are corresponding communication methods of a content provider and a node in the CCN.

## Summary of Invention

[Technical Problem]

The invention is defined by the claims. As the technique (CDN) described in PTL 1, in a technique where a predetermined management server manages devices that store a content, it is necessary to register placement locations of device storing the content to the management server.

In order to register a device that newly stores the content to the management server, it is necessary that the device which newly stores the content notifies the management server of storing the content. Alternatively, it is necessary that a device which registers the content notifies the management server of a placement location of the device which stores the content is arranged. Accordingly, for notification of information relating to contents and management of contents, complexity increases according to increase of the devices storing the contents and increase of contents to be stored. Further, when the management server does not function (for example, device goes down), a device using content cannot acquire the content.

In this way, the technique (CDN) described in PTL 1 has an issue that another device such as a management server is required in addition to content-storing devices. Moreover, the technique described in PTL 1 has another issue that content management is more complex and contents cannot be acquired when another device (management server) fails to operate in addition to the content-storing device.

The technique (CCN) described in NPL 1 has an issue that it is inefficient as detailed below.

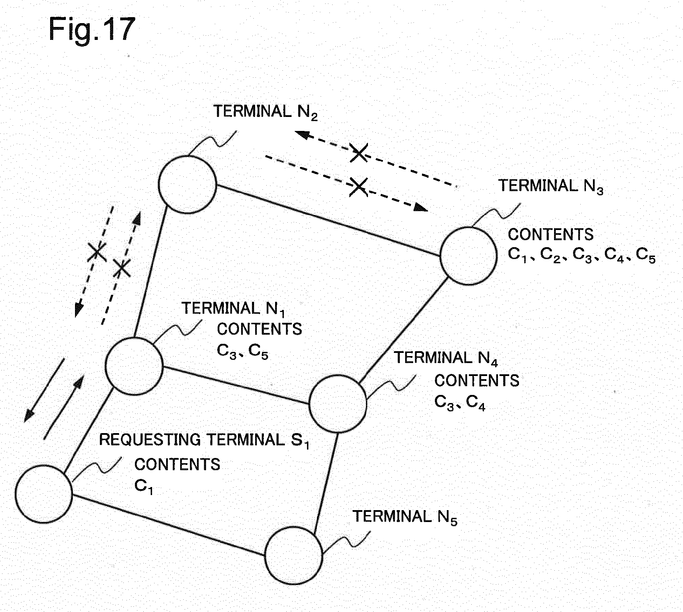

Referring to network configuration shown in Fig. 17, an issue with the CCN will be described below.

The network shown in Fig. 17 is configured with a plurality of terminals ($N_1$ to $N_5$), a requesting terminal ($S_1$), and a communication link connecting the terminals. Contents ($C_1$ to $C_5$) used in the description are provided with positional information. The requesting terminal $S_1$ designates, as a content request, a content-specifying condition (for example, an area (range or area) as positional information). Then, the requesting terminal $S_1$ acquires contents provided with the positional information in the designated area by using a request including such a condition.

For example, the requesting terminal $S_1$ requests contents by using a condition "contents inside an area $A_1$ which becomes an approximate circle with a center coordinate position $(x_1, y_1)$ and a radius $r_1$."

It is assumed that the contents provided with the positional information inside the designated area $A_1$ are the contents $C_1$, $C_2$, $C_3$, $C_4$, and $C_5$. Further, the contents ($C_1$ to $C_5$) are arranged in a distributed manner to communication terminals $N_1$, $N_3$ and $N_4$ as shown in Fig. 17. It is assumed that the communication terminal $N_3$ is the terminal that stores the original contents ($C_1$ to $C_5$). That is, when the cache function based on distributed placement does not operate, the requesting terminal $S_1$ need to acquire all the contents from the communication terminal $N_3$.

The requesting terminal $S_1$ has no information about which terminal stores which contents, what exits as the contents, how many contents are present, and the like. Thus, for the requesting terminal $S_1$, a content request is as a request targeting a large unspecified number of contents.

In the CCN, a content itself includes information about the content placement location (address). For example, when contents ($C_1$ to $C_5$) are represented as a structure using a content type (for example, "data"), an area (for example, "$A_1$"), and content names, the contents are respectively represented as below. The content $C_1$ is "/data/$A_1$/$C_1$". The content $C_2$ is "/data/$A_1$/$C_2$". The

content $C_3$ is "/data/$A_1$/$C_3$". The content $C_4$ is "/data/$A_1$/$C_4$". The content $C_5$ is "/data/$A_1$/$C_5$".

The requesting terminal $S_1$ uses an Interest message that requests contents included in "/data/$A_1$" as a content rage, as a content request. In other words, the requesting terminal $S_1$ transmits the request message and acquires the contents.

An order of communication route (transfer route) of the Interest message is assumed to be the order of the communication terminals $N_1$, $N_2$, and $N_3$.

When not using the cache function, the request message (Internet message) transmitted by the requesting terminal $S_1$ is transmitted via the route "$S_1 \rightarrow N_1 \rightarrow N_2 \rightarrow N_3$". Then, the contents corresponding to the request message is transmitted via the route "$N_3 \rightarrow N_2 \rightarrow N_1 \rightarrow S_1$". In other words, the communication route is "$S_1 \rightarrow N_1 \rightarrow N_2 \rightarrow N_3 \rightarrow N_2 \rightarrow N_1 \rightarrow S_1$".

On the other hand, for example, when the terminal $N_1$ stores all the target contents (for example, content $C_3$), the terminal $N_1$ returns the contents corresponding to the request message to the requesting terminal $S_1$. In this case, the communication route is "$S_1 \rightarrow N_1 \rightarrow S_1$". In this way, the CCN shortens the original communication route "$S_1 \rightarrow N_1 \rightarrow N_2 \rightarrow N_3 \rightarrow N_2 \rightarrow N_1 \rightarrow S_1$" to the route "$S_1 \rightarrow N_1 \rightarrow S_1$", and reduces content acquisition time of the requesting terminal $S_1$.

However, there is a case in which a terminal in the middle of the communication route (for example, $N_1$) stores (caches) some of the contents rather than all the requested target contents. In this case also, the terminal transmits the stored contents to the requesting terminal $S_1$. As shown in Fig. 17, for example, when the terminal $N_1$ stores contents $C_3$ and $C_5$, the terminal $N_1$ transmits the contents $C_3$ and/or $C_5$ to the requesting terminal $S_1$ in response to a request for contents including the content $C_3$ and/or $C_5$. When transmitting the contents, the terminal (for example, $N_1$) does not transfer the request message to a next terminal (for example, $N_2$) on the communication route.

The reason why a terminal does not transfer a request message will be described below. When the terminal $N_3$ that transfers some of the contents transmits the contents and transfers the request message, there is a case in which the terminal $N_5$ that stores the transferred contents receives the request message. In such a case, the terminal $N_5$ that stores the transferred contents transmits the transferred contents in response to the request message. For example, when the terminal $N_3$ receives a request message, the terminal $N_5$ transmits the contents $C_1$ to $C_5$ to the requesting terminal $S_1$. As a result, the requesting terminal $S_1$ receives the contents $C_3$ and $C_5$ redundantly. In this way, when the terminal that transmits a content transfers the request message, the requesting terminal $S_1$ receives the contents redundantly from all the terminals storing the contents on the route. In order to prevent such redundant reception, the terminal does not transfer the request message when transmitting a content.

In other words, when some of the contents are cached, the requesting terminal $S_1$ can acquire only the some of the cached contents.

In this way, there is an issue with the CCN that the CCN does not function properly when contents are unevenly located and distributed to a plurality of devices.

The CCN does not include means to request a plurality of contents, such as "/data/$A_1$/* (* indicates a wildcard)".

The CCN includes an exclude filed in the Interest message. The contents included in the exclude field are not subject to acquisition. The requesting terminal $S_1$ can acquire a plurality of contents by using the exclude field of the Interest message.

That is, the requesting terminal Si, after acquiring contents, adds information of the contents which are already acquired to the exclude field. Then, the requesting terminal $S_1$ transmits the Interest message (request message) once again. As a result, the requesting terminal $S_1$ can acquire contents that are not described in the exclude field. The requesting terminal $S_1$ can acquire all the contents in the network as a target of the request message by repeating this operation until it can no longer acquire contents.

In this operation, however, the requesting terminal $S_1$ needs to transmit request messages more than once. Thus, the operation is extremely inefficient operation.

As shown above, there is an issue with the technique (CCN) described in NPL 1 that the operation is inefficient.

[Solution to Problem]

The present invention provides an information processing device, an information processing method, and program, as set out in the appended claims.

An information processing device according to one aspect of the present invention includes: content storing means for storing a content; communication means for receiving, from a preceding device or a request source, and transmitting a request message that includes information indicating the request source that requests the content, a request condition that is a condition for determining the content that is a target of request, and a request-source-stored-content that includes information of a content stored by the request source; request determination means for determining a content that satisfies the request conditions and is not included in the request-source-stored-content in the contents stored in the content storing means; and request message processing means for, when the content is determined to satisfy the request condition and determined to be not included in the request-source-stored-content of the request source, updating the request-source-stored-content in the request message by adding information relating to the determined content to the request-source-stored-content, wherein when the content is determined to satisfy the request condition and determined to be not included in the request-source-stored-content of the request source, the request determination means transmits the determined content to the request source via the communication means, and transmits the updated request message to a next device via the communication means; and wherein when the content is determined not to satisfy the request condition, or is determined to be included in the request-source-stored-content of the request source, the request determination means transmits the request message, without update of the request-source-stored content in the request message, to a next device.

An information processing method according to one aspect of the present invention includes: receiving, from a preceding device or a request source, a request message that includes information indicating the request source that requests a content, a request condition that is a condition for determining the content that is a target of request, and a request-source-stored-content that includes information of a content stored by the request source; determining a content that satisfies the request conditions and is not included in the request-source-stored-content in the stored contents; and when the content is determined to satisfy the request condition and determined to be not included in the request-source-stored-content of the request source, updating the request-source-stored-content in the request message by adding information relating to the determined content to the request-source-stored-content, transmitting the determined content to the request source, and transmitting the updated request message to a next device; and when the content is determined not to satisfy the request condition, or is determined to be included in the request-source-stored- content of the request source, transmitting the request message without updating the request-source-stored-content in the request message to a next device.

A program according to one aspect of the present invention causes a computer to execute: processing of receiving, from a preceding device or a request source, a request message that includes information indicating the request source that requests a content, a request condition that is a condition for determining the content that is a target of request, and a request-source-stored-content that includes information of a content stored by the request source; processing of determining a content that satisfies the request conditions and is not included in the request-source-stored-content in the stored contents; and when the content is determined to satisfy the request condition and determined to be not included in the request-source-stored-content of the request source, processing of updating the request-source-stored-content in the request message by adding information relating to the determined content to the request-source-stored-content, transmitting the determined content to the request source, and transmitting the updated request message to a next device; and when the content is determined not to satisfy the request condition, or is determined to be included in the request-source-stored-content of the request source, processing of transmitting the request message without updating the request-source-stored-content in the request message to a next device.

[Advantageous Effects of Invention]

The invention offers an effect that a plurality of contents are efficiently acquired without requiring a management server or the like.

**Brief Description of Drawings**

[Fig. 1] Fig. 1 is a block diagram showing an example network including an information processing device according to a first example embodiment of the present invention.
[Fig. 2] Fig. 2 is a block diagram showing an example configuration of the information processing device according to the first example embodiment.
[Fig. 3] Fig. 3 is a diagram showing an example format of a request message according to the first example embodiment.
[Fig. 4] Fig. 4 is a diagram showing an example request message according to the first example embodiment.
[Fig. 5] Fig. 5 is a diagram showing an example request message according to the first example embodiment.
[Fig. 6] Fig. 6 is a diagram showing an example request message according to the first example embodiment.
[Fig. 7] Fig. 7 is a diagram showing an example request message according to the first example embodiment.
[Fig. 8] Fig. 8 is a flowchart showing an example operation of the information processing device according to the first example embodiment.
[Fig. 9] Fig. 9 is a flowchart showing an example operation of the information processing device according to the first example embodiment.
[Fig. 10] Fig. 10 is a block diagram showing an example configuration of an information processing device according to an example variation of the first example embodiment.
[Fig. 11] Fig. 11 is a block diagram showing an example configuration of an information processing device according to a second example embodiment.
[Fig. 12] Fig. 12 is a diagram showing an example format of a request message according to the second example embodiment.
[Fig. 13] Fig. 13 is a block diagram showing an example configuration of an information processing device according to a third example embodiment.
[Fig. 14] Fig. 14 is a diagram showing an example format of a request message according to the third example embodiment.
[Fig. 15] Fig. 15 is a flowchart showing an example operation of the information processing device according to the third example embodiment.
[Fig. 16] Fig. 16 is a flowchart showing another example operation of the information processing device according to the third example embodiment.
[Fig. 17] Fig. 17 is a diagram showing a network configuration used to describe a background technique.

**Description of Embodiments**

Next, example embodiments of the present invention will be described referring to drawings.
Each drawing is provided to illustrate example embodiments of the present invention. However, the present invention is not limited to the illustration of each drawing. Similar configurations of each drawing are given the same number and the repetitive description thereof may be omitted.
In the drawings used for the following explanation, a configuration of a known portion not associated with an example embodiment of the present invention may be omitted and not be illustrated.

<First example embodiment>

A first example embodiment of the present invention will be described referring to drawings.

[Prerequisites for description]

Prerequisites for the following description will be described below.

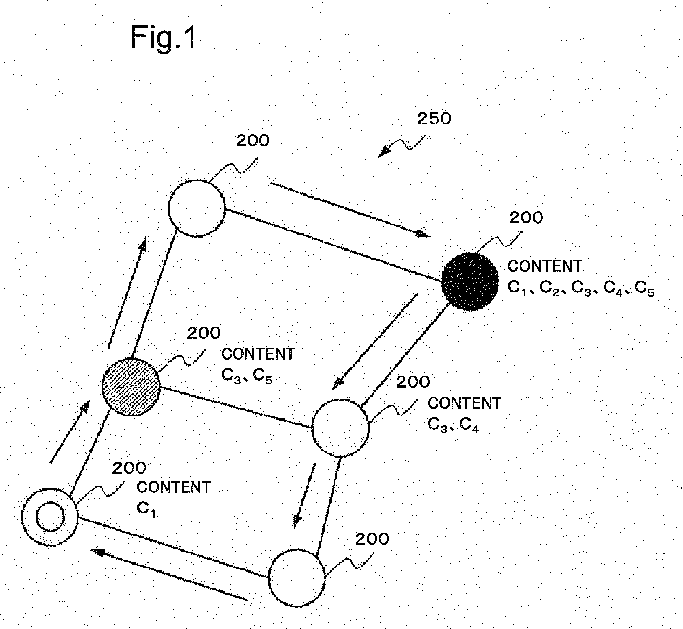

Fig. 1 is a block diagram showing an example configuration of a network 250 including an information processing device 200 according to a first example embodiment of the present invention.
The network 250 includes a plurality of information processing devices 200 connected via predetermined communication means (link). Any of the information processing devices 200 transmits a message (hereinafter referred to as a "request message") to request data (hereinafter referred to as a "content") stored in another information processing device 200. In the description that follows, an information processing device 200 that first transmits a request message is called a "request source". A request message is also called a query.
An information processing device 200, when receiving a request message from another information processing device 200 (hereinafter referred to as a "preceding device") along a predetermined route, executes processing in response to the request message. Then, the information processing device 200 transfers the request message, as necessary, to a next information processing device 200 (hereinafter referred to as a "next device") on the route.

In the following description, a transfer route of a request message in the network 250 is not particularly limited. The information processing device 200 may receive the request message from any information processing device 200. The information processing device 200 may transmit the request message to any information processing device 200.

A number of information processing devices 200 included in the network 250 in Fig. 1 is only an example and this example embodiment is not limited thereto. For example, the network 250 may include less than six information processing devices 200 or more than six information processing devices 200.

Communication means (links) of the network 250 is not particularly limited. Communication means (link) of the network 250 may be wireless or wired. Further, the network 250 may include a plurality types of communication means. Further, the network 250 may employ one-to-many communication or many-to-many communication rather than one-to-one communication.

The transfer route in the network 250 may be fixed or dynamically changed. The transfer route in the network 250 may be set such that the information processing device 200 receives the request message redundantly. In other words, the number of times that the information processing device 200 receives the request message is not particularly limited. The information processing device 200 may receive the request message a plurality of times. The network 250 may include an information processing device 200 that does not receive the request message.

Methods for selecting a transfer route in the network 250 are not particularly limited. For example, a selection method may be a method of repeating processing of selecting randomly a device of destination in the network 250. As an example of such route selection method, there is Routing Protocol. Alternatively, when the network 250 is a wired network, the selection method may be RIP (Routing Information Protocol) or OSPF (Open Shortest Path First). Alternatively, when the network 250 is a wireless network, the selection method may be an OLSR (Optimized Link State Routing) or an AODV (Ad-hoc On Demand distance Vector). Further, a selected route may include not only one path but also a plurality of paths of route.

In the description of the present example embodiment, for an example, as shown in Fig. 1, it is assumed that an route is from a bottom left information processing device 200, to center left, top left, top right, center right, and bottom right information processing devices 200 in clockwise order. However, this route is only one example for description. As stated above, the information processing device 200 may use a various approaches to determine transmission destination of a request message.

The information processing device 200 has no information about the content stored in the information processing devices 200 (hereinafter referred to as "other devices") except the own device.

The information processing devices 200 included in the network 250 can operate in a similar way and are indistinct. However, prerequisites that follow are used for convenience of description.

A request source is a bottom left information processing device 200 shown in Fig. 1 (a double circled information processing device 200). For example, the information processing device 200 as the request source receives a request to acquire five contents, contents $C_1$ to $C_5$, from an application operating on the own device or a device (not shown). As a result, the information processing device 200 as the request source acquires the contents $C_1$ to $C_5$. However, the information processing device 200 as the request source stores the content $C_1$. Accordingly, the information processing device 200 as the request source should acquire the contents $C_2$ to $C_5$ as an actual acquiring operation.

A center left information processing device 200 (a gray circle information processing device 200) stores the contents $C_3$ and $C_5$. A center right information processing device 200 stores the contents $C_3$ and $C_4$. A top right information processing device 200 (a black circle information processing device 200) stores the contents $C_1$ to $C_5$. That is, this information processing device 200 is a content storage source.

In the description that follows, a method for transmitting and receiving content is not particularly limited. In the following description, for example, the present example embodiment uses content names such as used for the CCN. In this case, for example, when a content name is for a content known between devices in the network 250, the information processing device 200 as the request source of the content requests the content to a device storing the content by using a request message including the content name.

Further, the information processing device 200, in addition to transmitting and transferring of the request message, may transmit contents to other devices to enhance the redundancy of contents in the network 250. In other words, at least some of the information processing devices 200 in the network 250 shares at least some of the contents. The contents may include a content shared by all devices. As shown in Fig. 1, at least a content or contents of a part of contents are distributed and located to the information processing devices 200 in the network 250.

As described above, the network 250 in the present example embodiment does not include a management server for managing placement locations of contents.

The present example embodiment does not need to use content names in the CCN as already mentioned above. However, when the present example embodiment uses a content name in the CCN, the present example embodiment may operate as described below, for example.

The contents include positional information re-

spectively. The contents are identified using positional information. A device as the content request source transmits a request message including information relating to the position of a content to be requested. For example, a request message includes information as "a content having positional information in a predetermined range centered on a predetermined position (for example, an area $A_1$)". The above request message requesting "a content having positional information in the area $A_1$" becomes a request message targeted for a plurality of contents whose locations are not specified (unspecified large number of contents).

**[0064]** A request message targeted for unspecified large number of contents has a designation method that differs depending on the number of elements constituting identifiers for identifying contents.

**[0065]** When a content identifier is composed based on a plurality of elements, a request message designates contents by using at least some of the elements.

**[0066]** It is assumed that, for example, an element to identify a content is "[content name]+[generator]". In this case, conditions to designate a content included in the request message are "a content where a generator of the content (or a generating device name) is 'mm'" or "a content having a content name 'nn'". Further, the condition to designate a content may be "a content where a generator of the content is 'mm' and a content name is 'nn'". Note that "mm" and "nn" are arbitrary names.

**[0067]** On the other hand, when a content identifier is composed of a single element, the value of the element can be compared in magnitude with a predetermined value (threshold value). The information processing device 200 may designate the content by using a request message including a predetermined threshold value. Alternatively, the information processing device 20 may designate a content by using a request message including the value of the content (a value relating to the above one element).

**[0068]** For example, when an element to identify a content is "generation time", a request becomes "a content generated at or after the time $t_0$". Alternatively, a request becomes "contents generated from the time $t_0$ to the time $t_1$".

**[0069]** For example, an element to identify a content may be information relating to the content such as a name or a type of content, information relating to time such as generation time or update time, or information relating to a device such as a generation device or an updating device. In this way, the element to identify a content is not particularly limited, as long as it can identify the content. For example, an element to identify a content may be the element uniquely defined by the user.

**[0070]** In the description that follows, a condition to designate a content of a target of a request as above-described is called a "request condition".

[Description of configuration]

**[0071]** Next, configuration of the information processing device 200 according to the first example embodiment of the present invention will be described referring to drawings.

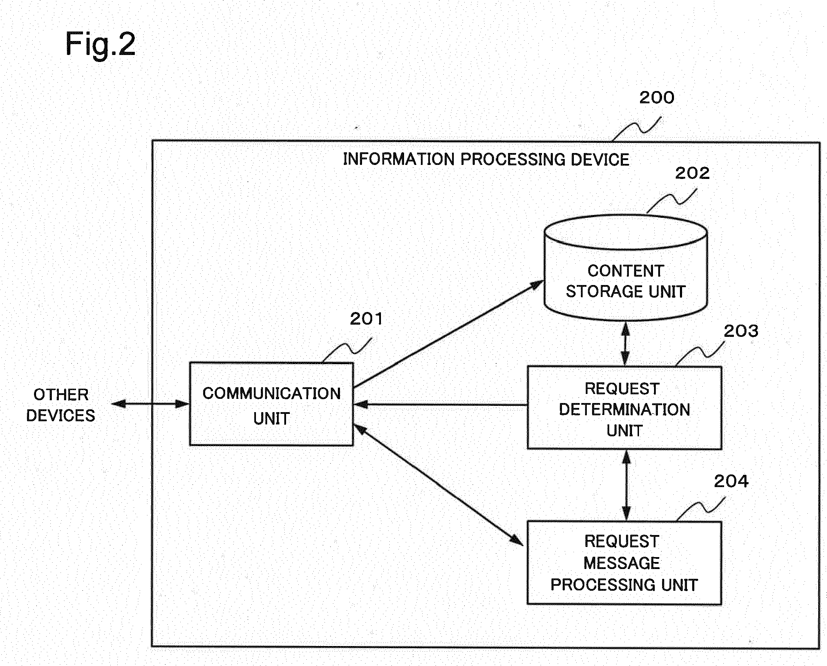

**[0072]** Fig. 2 is a block diagram showing an example configuration of the information processing device 200 according to the first example embodiment. However, the directions of arrows in the drawing show examples and do not limit the signal directions between blocks.

**[0073]** As shown in Fig. 2, the information processing device 200 includes a communication unit 201, a content storage unit 202, a request determination unit 203, and a request message processing unit 204.

**[0074]** The communication unit 201 transmits and receives information (for example, content and request message) via the network 250. More specifically, the communication unit 201 executes the operations (functions) described below.

**[0075]** The communication unit 201 communicates information with other devices. For example, the communication unit 201 transmits or receives a content including a text, an image or a video.

**[0076]** The communication unit 201 stores a content received from other devices onto the content storage unit 202.

**[0077]** The communication unit 201 receives, from the request determination unit 203, a content and information of a request source of the contents (hereinafter referred to as an "identifier"), and transmits the content to the request source.

**[0078]** The communication unit 201 transmits and receives a content request (request message) to and from other devices.

**[0079]** The communication unit 201 derivers a received request message to the request message processing unit 204.

**[0080]** The request message includes one filed or a plurality of fields. Each field includes, as field information, a field number 121, a parameter name 122, and its value (parameter value 123). The request message may include a field other than fields described below.

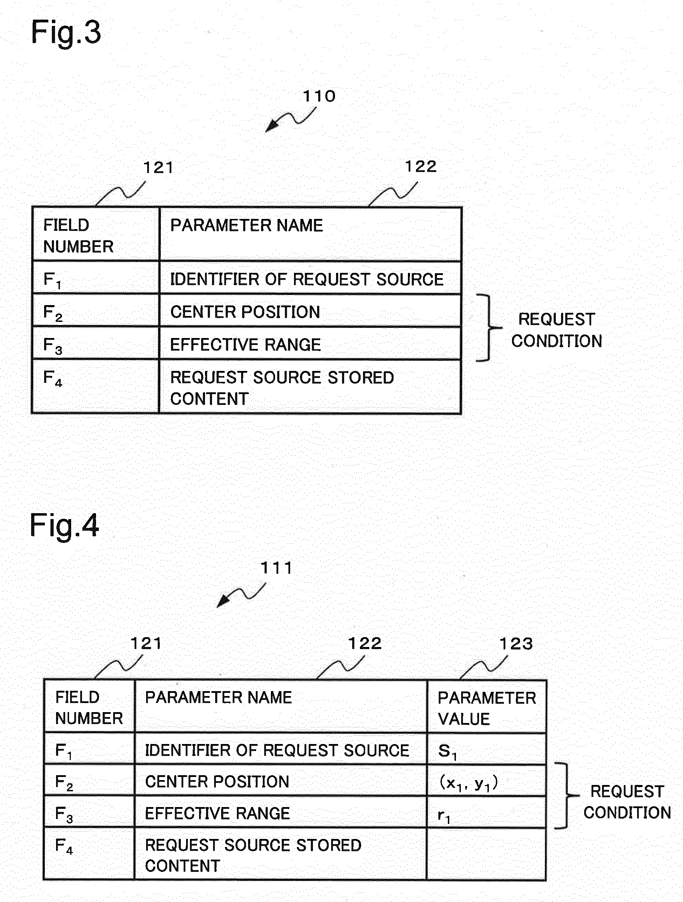

**[0081]** Fig. 3 is a diagram showing an example of a format 110 of the request message used to make a request message that appears in the following description.

**[0082]** As shown in Fig. 3, the format 110 of the request message includes a field number 121 indicating a request message field and a parameter name 122 that is a name of the field. The format 110 of the request message shown in Fig. 3 includes, as the fields, information (identifier) to identify a device (hereinafter referred to a "request source") that requests (transmits) a request message, a request condition, and a request-source-stored-content.

**[0083]** A field whose field number 121 is $F_1$ (hereinafter referred to as a "field $F_1$"; this rule also applies to the other fields) is information (identifier) to identify a device

(request source) that requests (transmits) a request message. The identifier of the request source is not particularly limited, as long as it is information by which transmission of a content to the request source can be executed. For example, the identifier of the request source may be a port number, an IP address, a MAC (Media Access Control) address, or a uniquely set address or name of the request source device.

Fields $F_2$ and $F_3$ are pieces of information (request conditions) to indicate the range of a content as a target of a request. Fig. 3 shows, as one example, the range of a content (center position of range (area) where a request as a target of interest is present and effective range). However, the request condition need not be limited thereto. For example, the request condition may be a combination of a content name and a generation device of the content. Further, the request condition need not be limited to two fields. The number of fields of the request condition may be one or more than two.

A field $F_4$ is information (request-source-stored-content) indicating information of the content already possessed (stored) by the request source. Because the request-source-stored-contents are generally plural in many case, the field $F_4$ desirably prepares a format to store a plurality of pieces of information. For example, the field $F_4$ is data preparing a table (list) format or a database format. In the description that follows, it is assumed that a list of the field $F_4$ is a list of identifiers of contents. The content information included in the request-source-stored-content needs only to uniquely identify the contents. For example, the content information may be the identifiers of the contents. That is, the request-source-stored-content may be a list of content identifiers.

Description will be returned to the description referring to Fig. 2.

The communication unit 201 transmits a request message generated or updated by the request message processing unit 204 to a next device on the transfer route.

As mentioned above, the transfer route in the present example embodiment is not particularly limited. Thus, the communication unit 201 may, for example, randomly select a device to transfer the request message from among the network 250. Alternatively, the communication unit 201 may randomly select a device to transfer the request message from among devices in a predetermined range.

The content storage unit 202 stores contents. More specifically, the content storage unit 202 stores contents as described below.

The content storage unit 202 stores contents (content entity) received by the communication unit 201. The content storage unit 202 desirably stores the contents (content entity) in association with the content identifiers.

The content storage unit 202 supplies the contents or content identifiers which is stored in response to a request by the request determination unit 203. The content storage unit 202, when supplying a plurality of contents or content identifiers, may use a list format.

The request determination unit 203 determines whether a content that satisfies the request condition included in the request message in the contents stored by the content storage unit 202. More specifically, the request determination unit 203 executes the following operation (function).

The request determination unit 203 receives the identifier of the request source, the request condition and the request-source-stored-content which are included in the request message from the request message processing unit 204.

Then, the request determination unit 203 determines whether there is a content that satisfies the request condition and is not included in the request-source-stored-content in the contents stored in the content storage unit 202.

When there is the content, the request determination unit 203 supplies the content and the identifiers of the request source to the communication unit 201. Further, the request determination unit 203 returns information indicating the content (for example, identifier) to the request message processing unit 204.

Further, the request determination unit 203 may add (update) the content information to the request-source-stored-content, and return the request-source-stored-content to the request message processing unit 204. In this case, the request message processing unit 204 can omit a processing to update the request-source-stored-content described later.

When there is not the content, the request determination unit 203 notifies the request message processing unit 204 of the absence of the content. When the request determination unit 203 updates the request-source-stored-content, the request determination unit 203 returns the received request-source-stored-content to the request message processing unit 204 without updating.

Operations of the request determination unit 203 will be described by using a more specific example operation.

As a prerequisite for the following description, it is assumed that the request determination unit 203 receives "$S_1$" as the identifier of the request source, "center position= $(x_1, y_1)$, effective range=$r_1$" as an example of the request condition, and "$C_1$" as the request-source-stored-content. Further, it is assumed that the content storage unit 202 stores the contents $C_3$ and $C_5$ as contents satisfying the condition.

The request determination unit 203, when receiving the above information from the request message processing unit 204, extracts the content that satisfies the request condition from the content storage unit 202.

Here, firstly, determination of the request condition will be described.

As an example, processing of determining whether the request condition "center position= $(x_1, y_1)$, effective range=$r_1$" is satisfied by the request determination unit 203 will be described.

Here, it is assumed that a position of the i content $C_i$ is $(x_i, y_i)$. When the content $C_i$ satisfies the request condition, the following Inequality 1 is established. In other words, the request determination unit 203 can determine whether the content $C_i$ satisfies the request condition by using Inequality 1.

[Inequality 1]

$$(x_i - x_1)^2 + (y_i - y_1)^2 \leqq r_1^2$$

However, the request condition need not be limited to the above example. The request condition may be, for example, information relating to the content such as a name or a type of the content, information relating to time such as generation time or update time, or information relating to a device such as a generation device or an updating device.

A case where, for example, the request condition is the content generation time will be described. It is assumed that the request condition is a content generated from the time $t_0$ to time $t_1$. Further, it is assumed that the generation time of the content $C_i$ is t;. In this case, the request determination unit 203 can determine whether the content $C_i$ satisfies the request condition based on whether t; satisfies Inequality 2 shown below.

[Inequality 2]

$$t_0 \leq t_i \leq t_1$$

Further, the request condition may include a plurality of conditions. When the request condition includes a plurality of conditions, the request determination unit 203 may determine that a content which satisfies (perfectly matches) all the conditions included in the request condition is a content satisfying the request condition. Alternatively, the request determination unit 203 may determine that a content which satisfies one condition or some of the conditions is a content satisfying the condition.

The request determination unit 203, based on the above operation, determines that contents that satisfy the request condition are the contents $C_3$ and $C_5$ (refer to Fig. 1). The request determination unit 203 extracts the contents $C_3$ and $C_5$ from the content storage unit 202.

The request determination unit 203 determines whether the extracted contents $C_3$ and $C_5$ are included in the request-source-stored-content.

In this case, neither the content $C_3$ nor $C_5$ matches with the request-source-stored-content (Ci).

Thereat, the request determination unit 203 supplies the contents $C_3$ and $C_5$ and the identifier of the request source to the communication unit 201. The communication unit 201 transmits the contents $C_3$ and $C_5$ to the request source.

The request determination unit 203 returns information relating to the contents $C_3$ and $C_5$ (for example, content identifiers) to the request message processing unit 204. The request determination unit 203 may update (add) the information relating to the contents $C_3$ and $C_5$ to the request-source-stored-content, and, then, return the updated request-source-stored-content to the request message processing unit 204.

The request message processing unit 204 generates or updates the request message. More specifically, the request message processing unit 204 executes the operations (functions) described below.

In a case of the request source device, the request message processing unit 204 makes (generates) the request message based on the identifier of the own device, the request condition, and the contents stored in the content storage unit 202. The request message processing unit 204 may request acquisition of information relating to the contents stored in the content storage unit 202 to the request determination unit 203. In other words, the request message processing unit 204 according to the present example embodiment makes (generates) the request message including information relating to the stored contents. Then, the request message processing unit 204 supplies the made request message to the communication unit 201. The communication unit 201 transmits the made request message to a next device on the transfer route.

In a case of not the request source device, that is, in a case of a relay device, the request message processing unit 204 updates a received request message as described below.

Namely, the request message processing unit 204 supplies the identifier of the request source, the request condition, and the request-source-stored-content which are included in the received request message to the request determination unit 203.

Then, the request message processing unit 204 waits for a response from the request determination unit 203.

When receiving a response that a content is absent from the request determination unit 203, the request message processing unit 204 transmits the received request message to the communication unit 201 without updating. In this case, the communication unit 201 transmits the received request message to a next device without updating. In other words, when not storing a content to be transmitted to the request source (a content that satisfies the request condition included in the request message and is not stored in the request source), the information processing device 200 transfers the request message to the next device on the transfer route.

When receiving information relating to a content (for example, an identifier) from the request determination unit 203, the request message processing unit 204 adds the information relating to the content (for example, the identifier) received from the request determination unit 203 to the request-source-stored-content. In other words, the request message processing unit 204 updates the request message.

The request message processing unit 204 transmits the updated request message to the communication unit 201. The communication unit 201 transmits the updated request message to a next device.

That is, even when the content stored in the own device is transmitted to the request source, the request message processing unit 204 transfers the updated request message to the next device.

Next, an example of specific operations of the request message processing unit 204 will be described referring to drawings.

First, the operation in the case of the request source (a double circled information processing device 200 shown in Fig. 1) will be described.

The request message processing unit 204 receives a content request from an application operating on the own device or an unillustrated external device. The request message processing unit 204 makes (generates) a request message based on the request. Here, as an example, the request message processing unit 204 makes a request message based on the format 110 of the request message shown in Fig. 3 mentioned above. As the values of each of the fields of the request message, it is assumed that an identifier of the request source is set to "Si" and the request condition is set to "$(x_1, y_1)$" and "$r_1$". It is assumed that the content storage unit 202 includes a content $C_1$ as a content satisfying the request condition.

Fig. 4 is a diagram showing an example of a request message 111 firstly made by the information processing device 200 in this case. The request message 111 includes, as mentioned above, a field number 121, a parameter name 122, and a parameter value 123.

Next, the request message processing unit 204 supplies the identifier of the request source, the request condition, and the request-source-stored-content (a blank list in this case) to the request determination unit 203.

The request message processing unit 204 receives, from the request determination unit 203, the content $C_1$ to be added to the request-source-stored-content. The request message processing unit 204 updates the request message by adding $C_1$ to the request-source-stored-content.

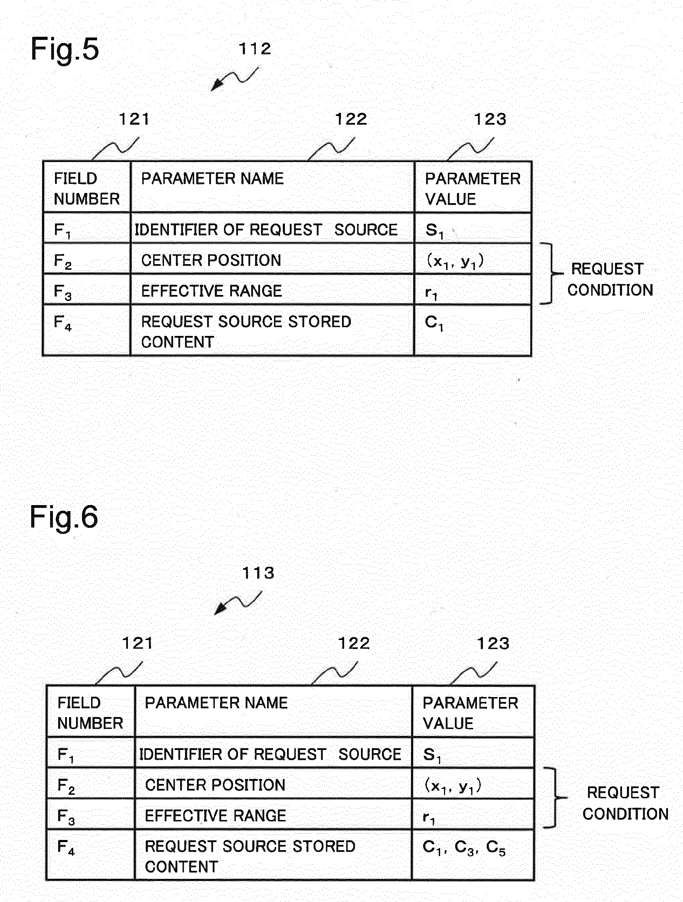

Fig. 5 is a diagram showing an example of a request message 112 in this time.

The request message processing unit 204 supplies the request message 112 shown in Fig. 5 to the communication unit 201. The communication unit 201 transmits the request message 112 to a next device.

Next, operation in the case of the information processing device 200 (gray circled information processing device 200 in Fig. 1) that receives the request message will be described.

In this case, the content storage unit 202 includes contents $C_3$ and $C_5$ as a content satisfying the request condition.

The request message processing unit 204 receives the request message 112 shown in Fig. 5 via the communication unit 201. Then, the request message processing unit 204 supplies the identifier of the request source, the request condition, and the request-source-stored-content which are shown in Fig. 5 to the request determination unit 203. Then, the request message processing unit 204 receives information of the contents $C_3$ and $C_5$ from the request determination unit 203. The request message processing unit 204 updates the request message by adding the information of the contents $C_3$ and $C_5$ to the request-source-stored-content in the request message.

Fig. 6 is a diagram showing an example of a request message 113 in this time.

The request message processing unit 204 supplies the request message 113 shown in Fig. 6 to the communication unit 201. The communication unit 201 transmits the request message 113 to a next device.

The communication unit 201 transmits the content to the request source.

In other words, when storing a content which the request source does not store, the information processing device 200 transmits the content to the request source. Then, the information processing device 200 updates the request message by adding the transmitted content to the content stored in the request message. The information processing device 200 transfers the updated request message to a next device.

For example, a black circled information processing device 200 shown in Fig. 1 includes the remaining contents $C_2$ and $C_4$. Thus, when receiving the request message, the information processing device 200 (the black circled information processing device 200 shown in Fig. 1) adds information relating to the contents $C_2$ and $C_4$ to the request-source-stored-content list in the request message.

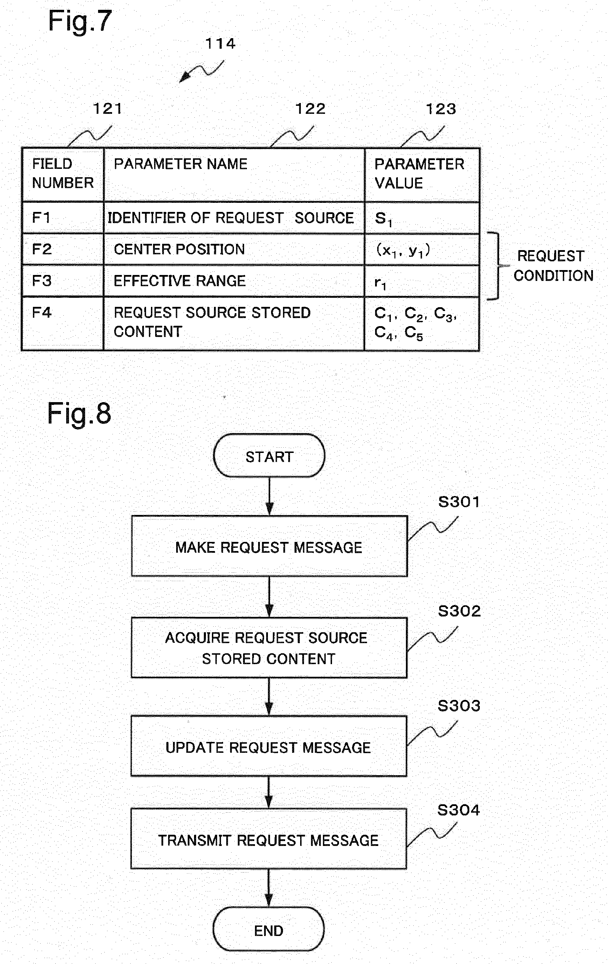

Fig. 7 is a diagram showing an example of the request message 114 in this time. The request message 114 includes the identifiers of all contents ($C_1$ to $C_5$) in the request-source-stored-content.

If not storing a content which the request source does not store, the information processing device 200 transfers the received request message to a next device without updating the request message.

For example, the top left information processing device 200 shown in Fig. 1 transfers the received request message without updating the request message.

Furthermore, when receiving the request message after transmitting the contents $C_3$ and $C_5$, the center left information processing device 200 transfers the received request message as it is because of no content to be transmitted to the request source.

[Description of operation]

Next, operations of the information processing device 200 will be described referring to drawings.

First, Operation in the case where the information processing device 200 is the request source will be described.

Fig. 8 is a flowchart showing an example operation when the information processing device 200 according to the first example embodiment is the request source.

A communication unit 201 of the information processing device 200 receives a content request from an unillustrated external device or an application operating on the own home device. This request includes at least an identifier of the request source (the own device in this case) and the request condition. The communication unit 201 transmits the request to the request message processing unit 204.

The request message processing unit 204 makes (generates) the request message based on the request (step S301).

The request message processing unit 204 transmits, to the request determination unit 203, the identifier of the request source, the request condition, and the request source stored request which are included in the request message. The request determination unit 203 returns information of the content satisfying the request condition to the request message processing unit 204. In other words, the request message processing unit 204 acquires the information of the content requested by the request source from the request determination unit 203 (step S302).

The request message processing unit 204 updates the request message made in step S301 based on the information of the received content (step S303). When there is no content satisfying the request condition, the request message processing unit 204 does not update the request message. In other words, the request message processing unit 204 leaves blank the request-source-stored-content.

The request message processing unit 204 supplies the updated request message to the communication unit 201. The communication unit 201 transmits the request message to a next communication terminal (step S304).

The information processing device 200 may change the order of step S301 and step S302. Alternatively, the information processing device 200 may execute operations of step S301 and step S302 in parallel.

Next, operations when the information processing device 200 relays the request message are described.

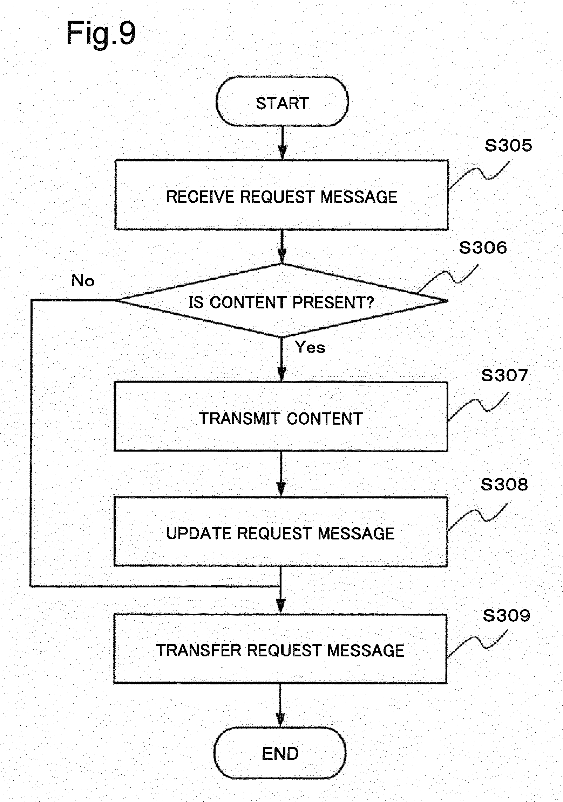

Fig. 9 is a flowchart showing an example operation when the information processing device 200 according to the first example embodiment relays the request message.

The request message processing unit 204 of the information processing device 200 receives the request message via the communication unit 201 (step S305).

The request message processing unit 204 transmits the identifier of the request source, the request condition, and the request-source-stored-content to the request determination unit 203. The request determination unit 203 determines whether there is a content that satisfies the request condition and is not stored by the request source (step S306).

When there is not the content (No in step S306), the process of the information processing device 200 goes to step S309.

When there is the content (Yes in step S306), the request determination unit 203 transmits the content to the request source via the communication unit 201 (step S307).

Next, the request message processing unit 204 updates the request message (step S308).

Then, the request message processing unit 204 transmits (transfers) the request message to a next terminal via the communication unit 201 (step S309).

Next, operation of the entire network 250 shown in Fig. 1 will be described.

The request source is a bottom left double circled information processing device 200 shown in Fig. 1 (hereinafter referred to as a "first device"). The first device (request source) makes (generates) a request message in order to request of a content (Fig. 4). Further, the first device updates the request message based on the content stored by the own device (Fig. 5). Then, the first device transmits the updated request message to a next device. In this case, it is assumed that the next device is a center left gray circled information processing device 200 (hereinafter referred to a "second device"). In this case, the first device stores a content $C_1$. Thus, the content request which is transmitted here includes the content $C_1$ in the request-source-stored-content as shown in Fig. 5.

The second device determines whether a content relating to the received request message is stored. In this case, the second device stores contents $C_3$ and $C_5$. Accordingly, the second device transmits the contents $C_3$ and $C_5$ to the request source (first device). Further, the second device updates the request message based on the contents $C_3$ and $C_5$ which are transmitted (Fig. 6). Then, the second device transfers the updated request message to a next device. In this case, it is assumed that the next device is a top left information processing device 200 (hereinafter referred to as a "third device").

The third device determines whether a content relating to the received request message is stored. In this case, the third device does not store the content. Consequently, the third device transfers the request message to a next device. In this case, it is assumed that the next device is a top right black circled information processing device 200 (hereinafter referred to as a "fourth device").

The fourth device determines whether a content relating to the received request message is stored. In this case, the contents $C_1$ to $C_5$ relate. However, $C_1$, $C_3$ and $C_5$ are included in the request-source-stored-content. Consequently, the fourth device transmits contents $C_2$ and $C_4$ in the stored contents $C_1$ to $C_5$ to the request source (first device). Then, the fourth device updates the request message (Fig. 7). The fourth device transfers the updated request message to a next device. In this case, it is assumed that the next device is a center right information processing device 200 (hereinafter referred to as a "fifth device").

The fifth device stores contents $C_3$ and $C_4$. However, the contents $C_3$ and $C_4$ are included in the request-source-stored-content. In other words, because the fifth device stores no contents to be transmitted to the request source (first device), the fifth device transfers the request message to a next device. In this case, it is assumed that the next device is a bottom right information processing device 200 (hereinafter referred to as a "sixth device").

The sixth device stores no contents to be transmitted to the request source (first device). Consequently, the sixth device transfers the request message to a next device. In this case, it is assumed that the next device is, for example, the bottom left information processing device 200 (request source).

As described later, in this example embodiment, the request message is discarded at a predetermined point in time. Until then, the request message is transferred by information processing devices 200 which include the request source and are included in the network 250. Therefore, when the request source receives the request message, the request source transfers the request message to a next device. In this way, the information processing device 200, even when it becomes the request source, receives and relays the request message.

In this way, the request source included in the network 250 configured based on the information processing devices 200 according to the present example embodiment can receive a content. Further, the request source can receive each content based on a maximum one receiving operation per content. Reason why the number of receiving operation is a maximum one receiving operation per content is because there is a case in which a plurality of contents are received by one receiving operation. In other words, the number of receiving operations of the request source may be smaller than the number of contents.

A route on which the second device and the fourth device transmit the content to the request source may be the same as or different from a transfer route of the request message.

The request message needs to be discarded at a predetermined point in time. Otherwise, unnecessary request messages go and come on a network for a lengthy period. However, the information processing device 200 according to the present example embodiment need not discard the request message. For example, an unillustrated device may determine a life of the request message (for example, a number of hops for an Internet protocol) and discard the request message. Alternatively, an unillustrated device may discard the request message based on time since the request source transmits the request messages. Alternatively, an unillustrated device may discard the unnecessary request message based on the content condition and the request-source-stored-content which are included in the request message.

However, the information processing device 200 according to the present example embodiment may discard the request message based on the above determination.

[Description of Advantageous Effects]

Advantageous effects of the first example embodiment will be described.

As described above, the information processing device 200 according to the first example embodiment achieves an advantageous effect to efficiently acquire a plurality of contents. Further, the information processing device 200 achieves an advantageous effect to efficiently transmit a plurality of contents to the request source.

The reasons are given below.

The request determination unit 203 of the information processing device 200 extracts the content that satisfies the request condition included in the request message received via the communication unit 201 in the contents stored in the content storage unit 202. Further, the request determination unit 203 determines and extracts the content that is not included in the request-source-stored-content included in the request message in the extracted content. Here, the request-source-stored-content indicates a content that is stored in the request source at that time. In other words, the request determination unit 203 determines a content so as not to transmit a content stored by the request source. Then, the request determination unit 203 transmits the extracted content which is a result of determination to the request source via the communication unit 201 based on the identifier of the request source included in the request message.

Further, the request message processing unit 204 updates the request message by adding the content determined by the request determination unit 203 to the request-source-stored-content. Then, the request message processing unit 204 transfers the updated request message to a next device. That is, the information processing device 200 can transfer the request message to a next device even when the own device transmits a target content to the request source.

Therefore, the request source can receive each content one time by transmitting the request message once. In this way, the request source can efficiently acquire contents.

Further, the network 250 including the information processing device 200 according to the present example embodiment achieves an advantageous effect that a server which manages content placement locations is not required.

This is because the information processing device 200 can operate based on the contents stored in the content storage unit 202 of the own device.

[Variations]

The information processing device 200 described above is configured as follows.

For example, each component of the information processing device 200 may be configured with a hardware circuit.

Alternatively, in the information processing device 200, each of components may be configured with a plurality of devices interconnected via a network.

Alternatively, in the information processing device 200, a plurality of components may be configured with a single hardware.

Alternatively, the information processing device 200 may be realized as a computer device including a CPU (Central Processing Unit), a ROM (Read Only Memory), and a RAM (Random Access Memory). The information processing device 200 may be realized as a computer device further including, in addition to the above configurations, an IOC (Input and Output Connection Circuit), and an NIC (Network Interface Circuit).

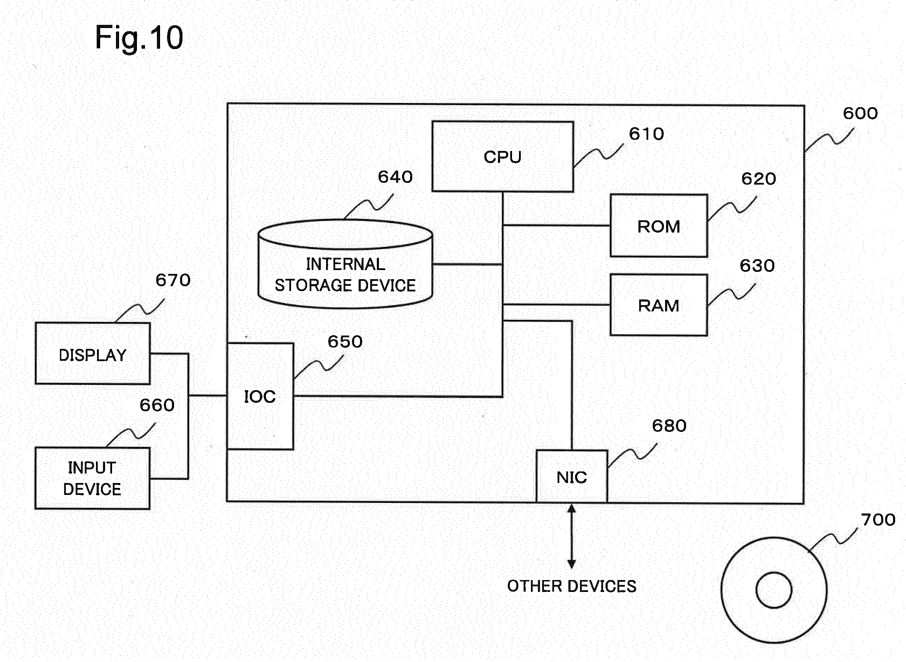

Fig. 10 is a block diagram showing an example configuration of an information processing device 600 according to the present variation.

The information processing device 600 includes a CPU 610, a ROM 620, a RAM 630, an internal storage device 640, an IOC 650, and an NIC 680 and configures a computer device.

The CPU 610 reads a program from the ROM 620. The CPU 610 controls the RAM 630, the internal storage device 640, the IOC 650, and the NIC 680 based on the read program. The computer including the CPU 610 controls the configurations and realizes each of functions as a communication unit 201, a content storage unit 202, a request determination unit 203, and a request message processing unit 204 which are shown in Fig. 2.

The CPU 610 may use the RAM 630 or the internal storage device 640 as a temporary storage for the program when realizing each of the functions.

Alternatively, the CPU 610 may read a program included in a storage medium 700 which stores the program with computer-readable manner by using an unillustrated storage medium reading device. Alternatively, the CPU 610 may receive a program from an unillustrated external device via the NIC 680, store the program on the RAM 630, and operate based on the stored program.

The ROM 620 stores the program executed by the CPU 610 and fixed data. The ROM 620 may be, for example, a P-ROM (Programmable-ROM) or a flash ROM.

The RAM 630 temporarily stores the program executed by the CPU 610 and data. The RAM 630 may be, for example, a D-RAM (Dynamic-RAM).

The internal storage device 640 stores the data and a program which are stored by the information processing device 600 for a long period. The internal storage device 640 may operate as a temporary storage for the CPU 610. The internal storage device 640 may be, for example, a hard disc device, a magneto-optical disk device, an SSD (Solid State Drive) or a disc array device. The internal storage device 640 operates as the content storage unit 202.

The ROM 620 and the internal storage device 640 are non-transitory storage media. On the other hand, the RAM 630 is a transitory storage medium. The CPU 610 can operate based on the program stored in the ROM 620, the internal storage device 640, or the RAM 630. In other words, the CPU 610 can operate by using a non-transitory storage medium or a transitory storage medium.

The IOC 650 intermediates the data communicated between the CPU 610, an input device 660 and a display 670. The IOC 650 may be, for example, an IO interface card or a USB (Universal Serial Bus) card.

The input device 660 receives input instructions from the operator of the information processing device 600. The input device 660 may be, for example, a keyboard, a mouse, or a touch panel.

The display 670 is a device that displays information to the operator of the information processing device 600. The display 670 may be, for example, a liquid-crystal display.

The NIC 680 relays exchange of data via a network with an unillustrated external device. The NIC 680 may be, for example, a LAN (Local Area Network) card. The NIC 680 operates as the communication unit 201.

The information processing device 600 configured in this way achieves the same effect as that of the information processing device 200.

This is because the CPU 610 of the information processing device 600 can realize the same functions as those of the information processing device 200 based on the program.

<Second example embodiment>

In the first example embodiment, the information processing device 200 has no information about the contents stored in other devices. Further, the information processing device 200 may receive the request message redundantly. In other words, there is a case in which the information processing device 200 receives the request message a plurality of times until the request source acquires a content.

However, the information processing device 200 which has already received the request message need not receive the request message again when there is no change in the content stored in the content storage unit 202. Thereat, an information processing device 400 according to the present example embodiment has a mechanism which does not select an information processing device 400 that has already received the request message as a next device (device of destination).

The information processing device 400 according to the present example embodiment may receive the request message a plurality of times. In other words, the information processing device 400 can coexist with the information processing device 200 in the network 250.

[Description of configuration]

First, configuration of the information processing device 400 according to the present example embodiment will be described.

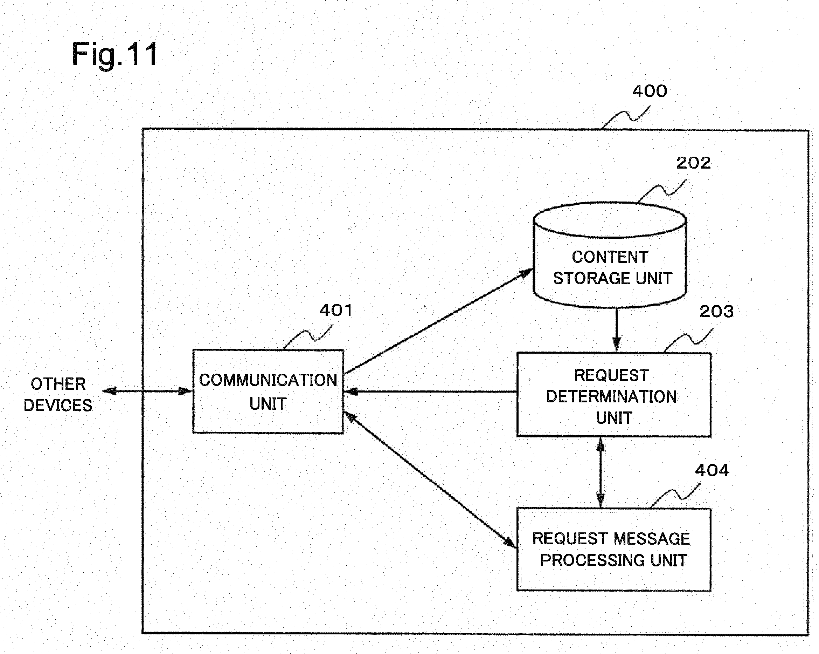

Fig. 11 is a block diagram showing an example configuration of the information processing device 400 according to the present example embodiment. However, the directions of arrows in the drawing show examples and do not limit the signal directions between blocks.

As shown in Fig. 11, the information processing device 400 differs in the point that it includes a communication unit 401 and a request message processing unit 404 instead of the communication unit 201 and the request message processing unit 204, as compared with the information processing device 200. The information processing device 400 may be configured by using the computer shown in Fig. 10.

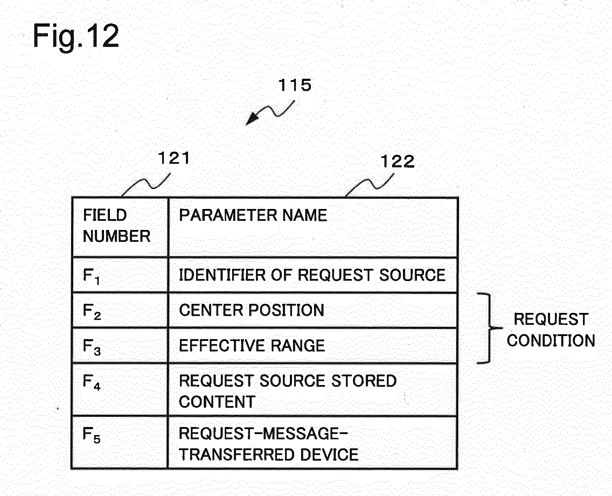

Fig. 12 is a diagram showing an example of a format 115 of the request message used by the information processing device 400 according to the second example embodiment.

In other words, the information processing device 400 uses the format 115 shown in Fig. 12 instead of the format 110 shown in Fig. 3 as a format of the request message.

Hereinafter, configurations and operations same as those of the first example embodiment are omitted, and specific configurations and operations of the present example embodiment will be described.

As shown in Fig. 12, the format 115 of the request message according to the present example embodiment includes a field relating to a transferred device (hereinafter referred to as a "field $F_5$") in addition to the fields in the format 110.

The communication unit 401 operates the same way as the communication unit 201 according to the first example embodiment. However, the communication unit 401 does not include an information processing device 400 included in the transferred devices in the field $F_5$ of the request message in the selection range when selecting a next device. In other words, the communication unit 401 transfers the request message to the devices except the transferred devices.

The request message processing unit 404 operates the same way as the request message processing unit 204 according to the first example embodiment. Further, the request message processing unit 404 adds information indicating the own device (for example, the identifier of the own device) to the transferred devices (field $F_5$) in the request message.

In other words, the information processing device 400 adds the information indicating the own device to the request message to be transferred. Then, the information processing device 400 selects a device to be transferred the request message except devices included in the request message, and transfers the request message.

The request message processing unit 404, when receiving the request message not including the field for the transferred devices, may update the request message by adding the field for the transferred devices. Alternatively, the request message processing unit 404 may operate the same way as that of the first example embodiment without adding the field.

When all the devices selectable as a next device are included in the transferred devices, the information processing device 400 need not transfer the request message. In such a case, the information processing device 400 may discard the request message.

Alternatively, the information processing device 400 may select a next device as a destination in the transferred devices by using a predetermined procedure (for example, the random or round robin). With this processing, the information processing device 400 can deal with it when there is a possibility that contents included in the content condition are changed.

[Description of Advantageous Effects]

Advantageous effects of the second example embodiment will be described.

As described above, the information processing device 400 according to the second example embodiment achieves an advantageous effect of realizing more efficient operations in addition to the effects of the information processing device 200 according to the first example embodiment.

The reasons are given below. The information processing device 400 transfers information of the own device included in the request message when executing the request message processing. Further, the information processing device 400, when transferring the request message, transfers the request message to a device except the processed devices. Therefore, this is because that the information processing device 400 that has processed the request message does not receive request messages subsequently. That is, this is because that the information processing device 400 transfers the request message to the information processing device 400 that has a possibility to store a content which is not transmitted to the request source yet. In other words, this is because that the information processing device 400 reduces transfers of unnecessary request messages.

<Third example embodiment>

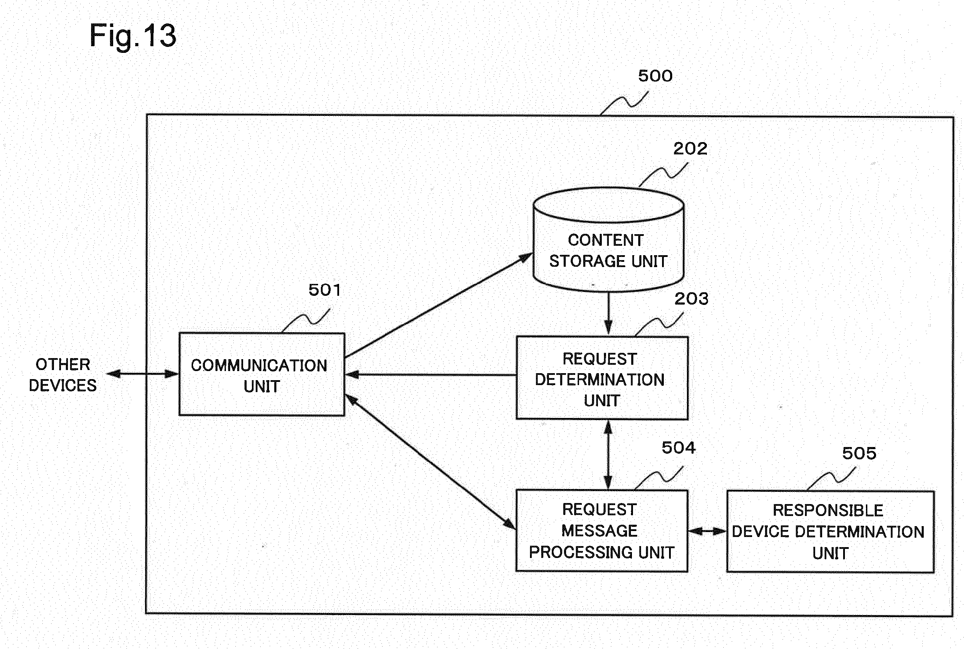

The information processing device 200 according to the first example embodiment and the information processing device 400 according to the second example embodiment have no information about other devices that store contents. On the other hand, in a third example embodiment shown in Fig. 13, an information processing device 500 as the request source has information about a device that is responsible for storing a content that satisfies the request condition in the content request. In other words, the information processing device 500 has information in advance on a content placement method or a responsible device described below. However, in the present example embodiment, a content may be stored in a device other than the responsible device to realize a cache function.

In the present example embodiment, the content placement method is determined in advance based on rules given below.

[Content placement rules]

(1) A content satisfying a predetermined condition is assigned to an information processing device 500 responsible for the content (hereinafter referred to as a "responsible device").
(2) The responsible device certainly stores the content satisfying the above predetermined condition.

The request source can identify the responsible device storing the content satisfying the request condition in the content request based on the rules.

Next, an example of rules satisfying the above rules is given below.

[Rule 1]

A content is placed on the information processing device 500 that is closest to the position where the content is generated. However, the content includes information of position at which the content is generated. The positional information contains errors within a certain range. Thus, there is a case in which a number of the information processing devices 500 in the closest position is plural number. In such a case, all the information processing devices 500 in the closest position may store the content. Alternatively, any one of, or a part of the information processing devices 500 may store the content.

According to this rule, at least one responsible device is determined with respect to every location. Further, a generated content is certainly stored at least in the closest responsible device to the position where the content is generated.

In the description that follows, it is assumed that positional information of the responsible devices is shared in advance by all the information processing devices 500. Moreover, a transfer route for the request message is from the request source to the responsible device. The information processing devices 500 share the transfer route at latest before the transfer source transmits the request message.

The rules according to the present example embodiment need not be limited to the above Rule 1. For example, a content may include, as positional information, randomly selected positional information rather than generated positional information.

The rules may use, not limited to positional information, information relating to a content such as a name or type of content, information relating to time such as generation time or update time, or information relating to a device such as a generation device or an updating device.

For example, the rule may be a rule that "a generation device of a content is a responsible device". With this rule also, one responsible device (content generation device) is certainly determined for each of contents, and at least the responsible device stores the content. Alternatively, the rule may be a rule that "a predetermined responsible device stores contents generated in a predetermined time zone". In a case of this rule, designating a time zone specifies a responsible terminal.

The information processing device 500 according to the present example embodiment can coexist with the information processing device 200 and the information processing device 400 in the network 250.

[Description of configuration]

Next, configuration of the information processing device 500 according to the third example embodiment will be described next.

Fig. 13 is a block diagram showing an example configuration of the information processing device 500 according to the third example embodiment. However, the directions of arrows in the drawing show examples and do not limit the signal directions between blocks.

As shown in Fig. 13, the information processing device 500 differs in the point that it includes a communication unit 501 and a request message processing unit 504 instead of the communication unit 201 and the request message processing unit 204, as compared with the information processing device 200. Further, the information processing device 500 includes a responsible device determination unit 505. The information processing device 500 may be configured by using a computer shown in Fig. 10. Further, the information processing device 500 may include a function relating to the transferred device in the request message according to the second example embodiment.

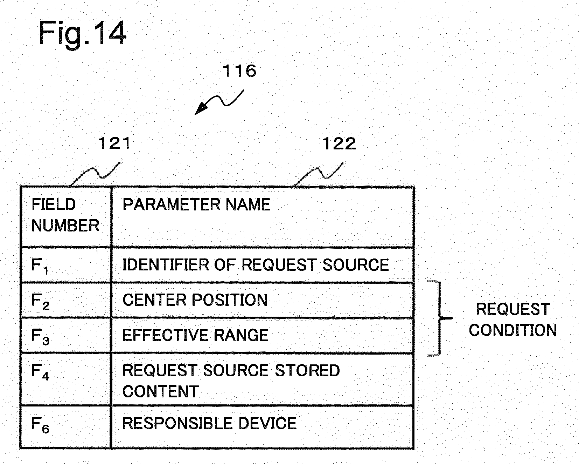

Fig. 14 is diagram showing an example of a format 116 of the request message used by the information processing device 500 according to the third example embodiment.

The information processing device 500 uses the format 116 shown in Fig. 14 instead of the format 110 shown in Fig. 3 as a format of the request message.

As shown in Fig. 14, the format 116 of the request message according to the present example embodiment includes a field relating to the responsible device (hereinafter referred to as a "field $F_6$") besides the fields in the format 110.

Hereinafter, configurations and operations same as those of the first and the second example embodiments are omitted, and specific configurations and operations of the present example embodiment will be described.

The communication unit 501 operates the same way as the communication unit 201 according to the first example embodiment. However, the communication unit 501 selects a next device along the transfer route to the responsible device described above when transmitting the request message to the next device. As an example method for determining a next device, there is a method for selecting a predetermined next device ("Next hop") in a routing table in which the responsible device is made a destination.

The request message processing unit 504 executes an operation for relating to the responsible device (field $F_6$) in addition to the operations of the request message processing unit 204 according to the first example embodiment.

When making the request message as the request source, the request message processing unit 504 makes a field (field $F_6$) which stores information of the responsible device (for example, an identifier) besides the fields used in the first example embodiment in the request message. Then, the request message processing unit 504 sets information of the responsible device to the made field $F_6$.

When the information processing device 500 receives the request message, the request message processing unit 504 transmits information of the responsible device to the responsible device determination unit 505, and requests the responsible device determination unit 505 to determine whether an own device is the responsible device.

When the own device is not the responsible device, the request message processing unit 504 operates the same way as the request message processing unit 204 according to the first example embodiment.

On the other hand, when the own device is the responsible device, the request message processing unit 504 does not transfer the request message. This is because the own device stores a target content when it is the responsible device.

The responsible device determination unit 505 determines whether the own device is the responsible device based on the request of the request message processing unit 504. The responsible device determination unit 505 may use the rule described above for the determination.

When receiving the request message not including the field for the responsible device, the request message processing unit 504 should operate the same way as in the first example embodiment.

[Description of operation]

Next, operations of the third example embodiment will be described referring to drawings.

Description of the same operations as in the first example embodiment are omitted.

The operations of the request source described by referring to Fig. 8 are the same as those in the first example embodiment except that a field is added, and thus detailed description of the operations is omitted.

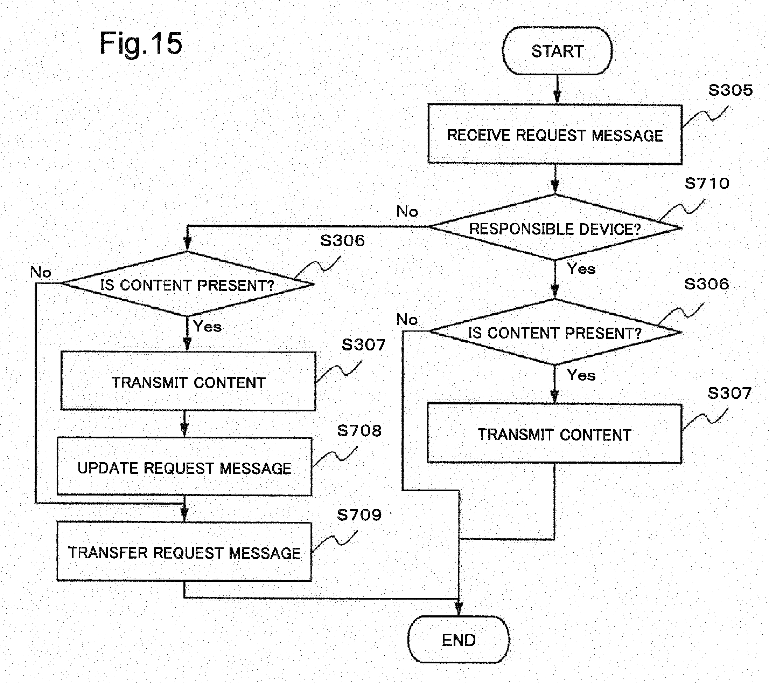

Fig. 15 is a flowchart showing an example operation when the information processing device 500 relays the request message. In Fig. 15, the same operations as in Fig. 9 are given the same sign and the detailed description thereof is omitted. The difference between steps S708 and S709 in Fig. 15 and steps S308 and S309 in Fig. 9 is a point in which the dealt request message has different fields. Further, these steps do not operate the information of the fields. In other words, steps S708 and S709 in Fig. 15 operate the same way as steps S308 and S309 in Fig. 9. Thus, the detailed description of steps S708 and S709 is omitted.

When receiving the request message (step S305), the request message processing unit 504 determines whether the own device is the responsible device included in the request message by using the responsible device determination unit 505 (step S710).

When the own device is not the responsible device (No in step S710), the request message processing unit 504 executes the same operations as in the first example embodiment, as mentioned above.

When the own device is the responsible device (Yes in step S710), the information processing device 500 determines whether the own device stores a content to be transmitted from the communication unit 501, similarly to step S306 in Fig. 9.

When there is no contents (No in step S306), the information processing device 500 ends the operation.

When there is the content (Yes in step S306), the information processing device 500 transmits the content, similarly to step S307 in Fig. 9. Then, the information processing device 500 ends the processing.

The information processing device 500 may execute determination on the responsible device in step S710 after determining a content.

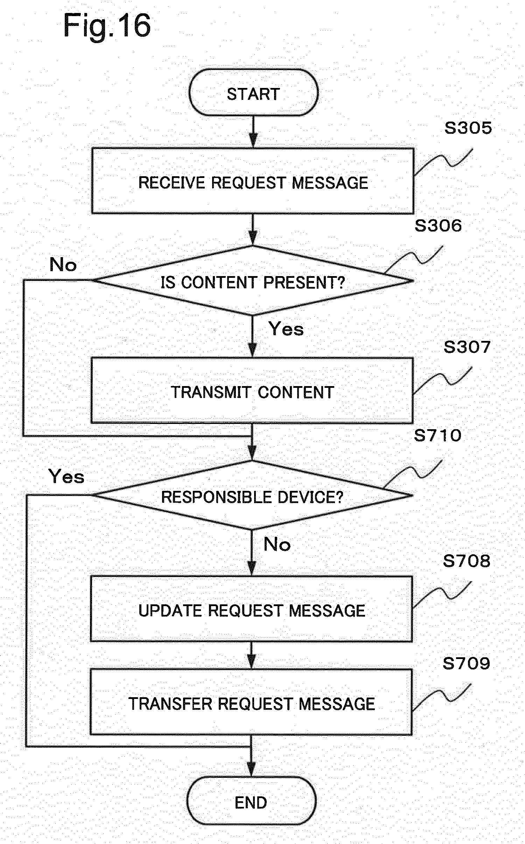

Fig. 16 is a flowchart showing another example operation of the information processing device 500 according to the third example embodiment.

In Fig. 16, the information processing device 500 executes determination of the responsible device after the processing of the content.

[Description of Advantageous Effects]

Advantageous effects of the third example embodiment will be described.

As described above, the information processing device 500 according to the third example embodiment achieves an advantageous effect that it realizes more efficient operations in addition to the effects of the first example embodiment.

The reasons are given below. The information processing device 500 transfers the request message along the transfer route determined based on the responsible device for the target content. In other words, the information processing device 500 uses a transfer route appropriate for acquisition of the content. Thus, the information processing device 500 reduces the time needed to acquire the content.

Further, the information processing device 500 does not transfer the request message when the own device is the responsible device. In other words, the information processing device 500 reduces unnecessary transfers of the request message.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

This application is based upon and claims the benefit of priority from Japanese patent application No. 2014-249058, filed on December 9, 2014.

[Reference Signs List]

    110 Format
    111 Request message
    112 Request message
    113 Request message
    114 Request message
    115 Format
    116 Format
    121 Field number
    122 Parameter name
    123 Parameter value
    200 Information processing device
    201 Communication unit
    202 Content storage unit
    203 Request determination unit
    204 Request message processing unit
    250 Network
    400 Information processing device
    401 Communication unit
    404 Request message processing unit
    500 Information processing device
    501 Communication unit

    504 Request message processing unit
    505 Responsible device determination unit
    600 Information processing device
    610 CPU
    620 ROM
    630 RAM
    640 Internal storage device
    650 IOC
    660 Input device
    670 Display
    680 NIC
    700 Storage medium

**Claims**

1. An information processing device (200) comprising:

   content storing means (202) for storing a content;
   communication means (201) for receiving, from a preceding device or a request source, and transmitting a request message that includes information indicating the request source that requests the content, a request condition that is a condition for determining the content that is a target of request, and a request-source-stored-content that includes information of a content stored by the request source;
   request determination means (203) for determining a content that satisfies the request conditions and is not included in the request-source-stored-content in the contents stored in the content storing means (202); and
   request message processing means (204) for, when the content is determined to satisfy the request conditions and determined to be not included in the request-source-stored-content of the request source, updating the request-source-stored-content in the request message by adding information relating to the determined content to-the-request-source-stored-content; wherein
   when the content is determined to satisfy the request conditions and determined to be not included in the request-source-stored-content of the request source, the request determination means (203) is configured to transmit the determined content to the request source via the communication means (201), and to transmit the updated request message to a next device via the communication means (201); and wherein
   when the content is determined not to satisfy the request conditions, or is determined to be included in the request-source-stored-content of the request source, the request determination means (203) is configured to transmit the request message via the communication means, without update of the request-source-stored content in the request message, to a next device.

2.  The information processing device (200) according to claim 1, wherein
    the request determination means (203) determines by using a predetermined part of the request condition.

3.  The information processing device (200) according to any one of claim 1 or 2, wherein
    the communication means (201) receives the content.

4.  The information processing device (200) according to any one of claims 1 to 3, wherein
    the request message includes information indicating a device that is transferred the request message,
    the request message processing means (204) adds information relating to an own device to the information indicating the transferred device, and
    the communication means (201) determines a device to transfer the request message based on the information indicating the transferred device.

5.  The information processing device (200) according to any one of claims 1 to 4, further comprising;
    responsible device determination means (505) for determining whether an own device is the responsible device, wherein
    the request message includes information relating to the responsible device that certainly stores the content, and
    the request message processing means (204) does not transfer the request message when the own device is the responsible device as a result of determination by the responsible device determination means (505).

6.  An information processing method comprising:

    receiving, from a preceding device or a request source, a request message that includes information indicating the request source that requests a content, a request condition that is a condition for determining the content that is a target of request, and a request-source-stored-content that includes information of a content stored by the request source;
    determining a content that satisfies the request conditions and is not included in the request-source-stored-content in the stored contents; and
    when the content is determined to satisfy the request conditions and determined to be not included in the request-source-stored-content of the request source, updating the request-source-stored-content in the request message by adding information relating to the determined content to the request-source-stored-content, transmitting the determined content to the request source, and transmitting the updated request message to a next device; and
when the content is determined not to satisfy the request conditions, or is determined to be included in the request-source-stored-content of the request source, transmitting the request message without updating the request-source-stored-content in the request message to a next device.

7.  A program to cause a computer to execute:

    processing of receiving, from a preceding device or a request source, a request message that includes information indicating the request source that requests a content, a request condition that is a condition for determining the content that is a target of request, and a request-source-stored-content that includes information of a content stored by the request source;
    processing of determining a content that satisfies the request conditions and is not included in the request-source-stored-content in the stored contents; and
    when the content is determined to satisfy the request conditions and determined to be not included in the request-source-stored-content of the request source, processing of updating the request-source-stored-content in the request message by adding information relating to the determined content to the request-source-stored-content, transmitting the determined content to the request source, and transmitting the updated request message to a next device; and
    when the content is determined not to satisfy the request conditions, or is determined to be included in the request-source-stored-content of the request source, processing of transmitting the request message without updating the request-source-stored-content in the request message to a next device.

## Patentansprüche

1.  Informationsverarbeitungsvorrichtung (200) mit:

    einer Inhaltsspeichereinrichtung (202) zum Speichern eines Inhalts;
    einer Kommunikationseinrichtung (201), die eine Anfragenachricht, die Information enthält, die eine Anfragequelle, die den Inhalt anfragt, eine Anfragebedingung, die eine Bedingung zum Bestimmen des Inhalts ist, der ein Ziel der Anfrage ist, und einen durch die Anfragequelle gespeicherten Inhalt anzeigt, der Information über einen durch die Anfragequelle gespeicherten Inhalt enthält, von einem vorangehenden Gerät oder von der Anfragequelle empfängt und überträgt;

einer Anfragebestimmungseinrichtung (203) zum Bestimmen eines Inhalts, der die Anfragebedingungen erfüllt und nicht in dem durch die Anfragequelle gespeicherten Inhalt enthalten ist, in den in der Inhaltsspeichereinrichtung (202) gespeicherten Inhalten; und

einer Anfragenachrichtverarbeitungseinrichtung (204), die, wenn bestimmt wird, dass der Inhalt die Anfragebedingungen erfüllt, und bestimmt wird, dass er nicht in dem durch die Anfragequelle gespeicherten Inhalt der Anfragequelle enthalten ist, den in der Anfragequelle gespeicherten Inhalt in der Anfragenachricht durch Hinzufügen von Information, die mit dem bestimmten Inhalt in Beziehung steht, zum durch die Anfragequelle gespeicherten Inhalt aktualisiert,

wobei, wenn bestimmt wird, dass der Inhalt die Anfragebedingungen erfüllt, und bestimmt wird, dass er nicht in dem durch die Anfragequelle gespeicherten Inhalt der Anfragequelle enthalten ist, die Anfragebestimmungseinrichtung (203) dafür konfiguriert ist, den bestimmten Inhalt über die Kommunikationseinrichtung (201) an die Anfragequelle zu übertragen und die aktualisierte Anfragenachricht über die Kommunikationseinrichtung (201) an ein nächstes Gerät zu übertragen, und wobei,

wenn bestimmt wird, dass der Inhalt die Anfragebedingungen nicht erfüllt, oder bestimmt wird, dass er in dem durch die Anfragequelle gespeicherten Inhalt der Anfragequelle enthalten ist, die Anfragebestimmungseinrichtung (203) dafür konfiguriert ist, die Anfragenachricht über die Kommunikationseinrichtung an ein nächstes Gerät zu übertragen, ohne den durch die Anfragequelle gespeicherten Inhalt in der Anfragenachricht zu aktualisieren.

2. Informationsverarbeitungsvorrichtung (200) nach Anspruch 1, wobei die Anfragebestimmungseinrichtung (203) die Bestimmung unter Verwendung eines vorgegebenen Teils der Anfragebedingung ausführt.

3. Informationsverarbeitungsvorrichtung (200) nach Anspruch 1 oder 2, wobei die Kommunikationseinrichtung (201) den Inhalt empfängt.

4. Informationsverarbeitungsvorrichtung (200) nach einem der Ansprüche 1 bis 3, wobei

die Anfragenachricht Information enthält, die ein Gerät anzeigt, das die Anfragenachricht übertragen hat,

die Anfragenachrichtverarbeitungseinrichtung (204) Information, die mit einem eigenen Gerät in Beziehung steht, der Information hinzufügt, die das Gerät anzeigt, das die Anfragenachricht übertragen hat; und

die Kommunikationseinrichtung (201) ein Gerät zum Übertragen der Anfragenachricht basierend auf der Information bestimmt, die das Gerät anzeigt, das die Anfragenachricht übertragen hat.

5. Informationsverarbeitungsvorrichtung (200) nach einem der Ansprüche 1 bis 4, ferner mit

einer Einrichtung (505) zum Bestimmen eines verantwortlichen Geräts zum Bestimmen, ob ein eigenes Gerät das verantwortliche Gerät ist, wobei

die Anfragenachricht Information enthält, die mit dem verantwortlichen Gerät in Beziehung steht, das den Inhalt sicher speichert, und

die Anfragenachrichtverarbeitungseinrichtung (204) die Anfragenachricht als Ergebnis der Bestimmung durch die Einrichtung (505) zum Bestimmen eines verantwortlichen Geräts nicht überträgt, wenn das eigene Gerät das verantwortliche Gerät ist.

6. Informationsverarbeitungsverfahren mit den Schritten:

Empfangen einer Anfragenachricht, die Information enthält, die eine Anfragequelle, die einen Inhalt anfragt, eine Anfragebedingung, die eine Bedingung zum Bestimmen des Inhalts ist, der ein Ziel der Anfrage ist, und einen durch eine Anfragequelle gespeicherten Inhalt anzeigt, der Information über einen durch die Anfragequelle gespeicherten Inhalt enthält, von einem vorhergehenden Gerät oder von der Anfragequelle;

Bestimmen eines Inhalts, der die Anfragebedingungen erfüllt und nicht in dem durch die Anfragequelle gespeicherten Inhalt enthalten ist, in den gespeicherten Inhalten; und

wenn bestimmt wird, dass der Inhalt die Anfragebedingungen erfüllt, und bestimmt wird, dass er nicht in dem durch die Anfragequelle gespeicherten Inhalt der Anfragequelle enthalten ist, Aktualisieren des durch die Anfragequelle gespeicherten Inhalts in der Anfragenachricht durch Hinzufügen von Information, die mit dem bestimmten Inhalt in Beziehung steht, zu dem durch die Anfragequelle gespeicherten Inhalt, Übertragen des bestimmten Inhalts an die Anfragequelle und Übertragen der aktualisierten Anfragenachricht an ein nächstes Gerät; und wenn bestimmt wird, dass der Inhalt die Anfragebedingungen nicht erfüllt, oder bestimmt wird, dass er in dem durch die Anfragequelle gespeicherten Inhalt der Anfragequelle enthalten ist, Übertragen der Anfragenachricht, ohne den durch die Anfragenachricht gespeicherten Inhalt in der Anfragenachricht zu aktualisieren, an ein nächstes Gerät.

7. Programm, das einen Computer veranlasst, auszuführen:

eine Verarbeitung zum Empfangen einer Anfragenachricht, die Information enthält, die eine Anfragequelle, die einen Inhalt anfordert, eine Anfragebedingung, die eine Bedingung zum Bestimmen des Inhalts ist, der ein Ziel der Anfrage ist, und einen durch eine Anfragequelle gespeicherten Inhalt anzeigt, der Information eines durch die Anfragequelle gespeicherten Inhalts enthält, von einem vorhergehenden Gerät oder von der Anfragequelle;
eine Verarbeitung zum Bestimmen eines Inhalts, der die Anfragebedingungen erfüllt und nicht in dem durch die Anfragequelle gespeicherten Inhalt enthalten ist, in den gespeicherten Inhalten; und
wenn bestimmt wird, dass der Inhalt die Anfragebedingungen erfüllt, und bestimmt wird, dass er nicht in dem durch die Anfragequelle gespeicherten Inhalt der Anfragequelle enthalten ist, eine Verarbeitung zum Aktualisieren des durch die Anfragequelle gespeicherten Inhalts in der Anfragenachricht durch Hinzufügen von Information, die mit dem bestimmten Inhalt in Beziehung steht, zu dem durch die Anfragequelle gespeicherten Inhalt, Übertragen des bestimmten Inhalts an die Anfragequelle und Übertragen der aktualisierten Anfragenachricht an ein nächstes Gerät; und
wenn bestimmt wird, dass der Inhalt die Anfragebedingungen nicht erfüllt, oder bestimmt wird, dass er in dem durch die Anfragequelle gespeicherten Inhalt der Anfragequelle enthalten ist, eine Verarbeitung zum Übertragen der Anfragenachricht, ohne den durch die Anfragequelle gespeicherten Inhalt in der Anfragenachricht zu aktualisieren, an ein nächstes Gerät.

**Revendications**

1. Dispositif de traitement d'informations (200) comprenant :

un moyen de stockage de contenu (202) pour stocker un contenu ;

un moyen de communication (201) pour recevoir, depuis un dispositif précédent ou une source de demande, et transmettre un message de demande qui comporte des informations indiquant la source de demande qui demande le contenu, une condition de demande qui est une condition pour déterminer le contenu qui est une cible de demande, et un contenu stocké par la source de demande qui comporte des informations d'un contenu stocké par la source de demande ;
un moyen de détermination de demande (203) pour déterminer un contenu qui satisfait les conditions de demande et n'est pas inclus dans le contenu stocké par la source de demande dans les contenus stockés dans le moyen de stockage de contenu (202) ; et
un moyen de traitement de message de demande (204) pour, lorsque le contenu est déterminé comme satisfaisant les conditions de demande et déterminé comme n'étant pas inclus dans le contenu stocké par la source de demande de la source de demande, mettre à jour le contenu stocké par la source de demande dans le message de demande en ajoutant des informations relatives au contenu déterminé au contenu stocké par la source de demande ; dans lequel
lorsque le contenu est déterminé comme satisfaisant les conditions de demande et déterminé comme n'étant pas inclus dans le contenu stocké par la source de demande de la source de demande, le moyen de détermination de demande (203) est configuré pour transmettre le contenu déterminé à la source de demande via le moyen de communication (201), et pour transmettre le message de demande mis à jour à un dispositif suivant via le moyen de communication (201) ; et dans lequel
lorsque le contenu est déterminé comme ne satisfaisant pas les conditions de demande, ou est déterminé comme étant inclus dans le contenu stocké par la source de demande de la source de demande, le moyen de détermination de demande (203) est configuré pour transmettre le message de demande via le moyen de communication, sans mise à jour du contenu stocké par la source de demande dans le message de demande, à un dispositif suivant.

2. Dispositif de traitement d'informations (200) selon la revendication 1, dans lequel
le moyen de détermination de demande (203) effectue la détermination en utilisant une partie prédéterminée de la condition de demande.

3. Dispositif de traitement d'informations (200) selon l'une quelconque de la revendication 1 ou 2, dans lequel

le moyen de communication (201) reçoit le contenu.

**4.** Dispositif de traitement d'informations (200) selon l'une quelconque des revendications 1 à 3, dans lequel
le message de demande comporte des informations indiquant un dispositif qui a transféré le message de demande,
le moyen de traitement de message de demande (204) ajoute des informations relatives à un propre dispositif aux informations indiquant le dispositif transféré, et
le moyen de communication (201) détermine un dispositif pour transférer le message de demande d'après les informations indiquant le dispositif transféré.

**5.** Dispositif de traitement d'informations (200) selon l'une quelconque des revendications 1 à 4, comprenant en outre :

un moyen de détermination de dispositif responsable (505) pour déterminer si un propre dispositif est le dispositif responsable, dans lequel
le message de demande comporte des informations relatives au dispositif responsable qui stocke avec certitude le contenu, et
le moyen de traitement de message de demande (204) ne transfère pas le message de demande lorsque le propre dispositif est le dispositif responsable à la suite d'une détermination par le moyen de détermination de dispositif responsable (505).

**6.** Procédé de traitement d'informations comprenant :

la réception, depuis un dispositif précédent ou une source de demande, d'un message de demande qui comporte des informations indiquant la source de demande qui demande un contenu, une condition de demande qui est une condition pour déterminer le contenu qui est une cible de demande, et un contenu stocké par la source de demande qui comporte des informations d'un contenu stocké par la source de demande ;
la détermination d'un contenu qui satisfait les conditions de demande et n'est pas inclus dans le contenu stocké par la source de demande dans les contenus stockés ; et
lorsque le contenu est déterminé comme satisfaisant les conditions de demande et déterminé comme n'étant pas inclus dans le contenu stocké par la source de demande de la source de demande, la mise à jour du contenu stocké par la source de demande dans le message de demande en ajoutant des informations relatives au contenu déterminé au contenu stocké par la source de demande, la transmission du contenu déterminé à la source de demande, et la transmission du message de demande mis à jour à un dispositif suivant ; et
lorsque le contenu est déterminé comme ne satisfaisant pas les conditions de demande, ou est déterminé comme étant inclus dans le contenu stocké par la source de demande de la source de demande, la transmission du message de demande sans mettre à jour le contenu stocké par la source de demande dans le message de demande à un dispositif suivant.

**7.** Programme pour amener un ordinateur à exécuter :

un traitement de réception, depuis dispositif précédent ou une source de demande, d'un message de demande qui comporte des informations indiquant la source de demande qui demande un contenu, une condition de demande qui est une condition pour déterminer le contenu qui est une cible de demande, et un contenu stocké par la source de demande qui comporte des informations d'un contenu stocké par la source de demande ;
un traitement de détermination d'un contenu qui satisfait les conditions de demande et n'est pas inclus dans le contenu stocké par la source de demande dans les contenus stockés ; et
lorsque le contenu est déterminé comme satisfaisant les conditions de demande et déterminé comme n'étant pas inclus dans le contenu stocké par la source de demande de la source de demande, un traitement de mise à jour du contenu stocké par la source de demande dans le message de demande en ajoutant des informations relatives au contenu déterminé au contenu stocké par la source de demande, de transmission du contenu déterminé à la source de demande, et de transmission du message de demande mis à jour à un dispositif suivant ; et
lorsque le contenu est déterminé comme ne satisfaisant pas les conditions de demande, ou est déterminé comme étant inclus dans le contenu stocké par la source de demande de la source de demande, un traitement de transmission du message de demande sans mettre à jour le contenu stocké par la source de demande dans le message de demande à un dispositif suivant.

Fig.1

250

200

200

CONTENT
$C_1$、$C_2$、$C_3$、$C_4$、$C_5$

200

CONTENT
$C_3$、$C_5$

200

CONTENT
$C_3$、$C_4$

200

CONTENT
$C_1$

200

Fig.2

EP 3 232 332 B1

# Fig.3

110

| FIELD NUMBER | PARAMETER NAME | |
|---|---|---|
| $F_1$ | IDENTIFIER OF REQUEST SOURCE | |
| $F_2$ | CENTER POSITION | REQUEST CONDITION |
| $F_3$ | EFFECTIVE RANGE | |
| $F_4$ | REQUEST SOURCE STORED CONTENT | |

121     122

# Fig.4

111

| FIELD NUMBER | PARAMETER NAME | PARAMETER VALUE | |
|---|---|---|---|
| $F_1$ | IDENTIFIER OF REQUEST SOURCE | $S_1$ | |
| $F_2$ | CENTER POSITION | $(x_1, y_1)$ | REQUEST CONDITION |
| $F_3$ | EFFECTIVE RANGE | $r_1$ | |
| $F_4$ | REQUEST SOURCE STORED CONTENT | | |

121     122     123

## Fig.5

112

| FIELD NUMBER | PARAMETER NAME | PARAMETER VALUE |
|---|---|---|
| $F_1$ | IDENTIFIER OF REQUEST SOURCE | $S_1$ |
| $F_2$ | CENTER POSITION | $(x_1, y_1)$ |
| $F_3$ | EFFECTIVE RANGE | $r_1$ |
| $F_4$ | REQUEST SOURCE STORED CONTENT | $C_1$ |

121 122 123

REQUEST CONDITION (rows $F_2$, $F_3$)

## Fig.6

113

| FIELD NUMBER | PARAMETER NAME | PARAMETER VALUE |
|---|---|---|
| $F_1$ | IDENTIFIER OF REQUEST SOURCE | $S_1$ |
| $F_2$ | CENTER POSITION | $(x_1, y_1)$ |
| $F_3$ | EFFECTIVE RANGE | $r_1$ |
| $F_4$ | REQUEST SOURCE STORED CONTENT | $C_1, C_3, C_5$ |

121 122 123

REQUEST CONDITION (rows $F_2$, $F_3$)

## Fig.7

114

121          122          123

| FIELD NUMBER | PARAMETER NAME | PARAMETER VALUE |
|---|---|---|
| F1 | IDENTIFIER OF REQUEST SOURCE | $S_1$ |
| F2 | CENTER POSITION | $(x_1, y_1)$ |
| F3 | EFFECTIVE RANGE | $r_1$ |
| F4 | REQUEST SOURCE STORED CONTENT | $C_1, C_2, C_3, C_4, C_5$ |

} REQUEST CONDITION

## Fig.8

START

↓

MAKE REQUEST MESSAGE — S301

↓

ACQUIRE REQUEST SOURCE STORED CONTENT — S302

↓

UPDATE REQUEST MESSAGE — S303

↓

TRANSMIT REQUEST MESSAGE — S304

↓

END

# Fig.9

START

RECEIVE REQUEST MESSAGE — S305

IS CONTENT PRESENT? — S306

No

Yes

TRANSMIT CONTENT — S307

UPDATE REQUEST MESSAGE — S308

TRANSFER REQUEST MESSAGE — S309

END

Fig.10

DISPLAY — 670

INPUT DEVICE — 660

IOC — 650

INTERNAL STORAGE DEVICE — 640

CPU — 610

ROM — 620

RAM — 630

NIC — 680

OTHER DEVICES

600

700

EP 3 232 332 B1

Fig.11

# Fig.12

115

121    122

| FIELD NUMBER | PARAMETER NAME | |
|---|---|---|
| $F_1$ | IDENTIFIER OF REQUEST SOURCE | |
| $F_2$ | CENTER POSITION | REQUEST CONDITION |
| $F_3$ | EFFECTIVE RANGE | |
| $F_4$ | REQUEST SOURCE STORED CONTENT | |
| $F_5$ | REQUEST-MESSAGE-TRANSFERRED DEVICE | |

Fig.13

EP 3 232 332 B1

# Fig.14

116

121                             122

| FIELD NUMBER | PARAMETER NAME |
|---|---|
| $F_1$ | IDENTIFIER OF REQUEST SOURCE |
| $F_2$ | CENTER POSITION |
| $F_3$ | EFFECTIVE RANGE |
| $F_4$ | REQUEST SOURCE STORED CONTENT |
| $F_6$ | RESPONSIBLE DEVICE |

REQUEST CONDITION

# Fig.15

START

RECEIVE REQUEST MESSAGE — S305

RESPONSIBLE DEVICE? — S710

No → IS CONTENT PRESENT? — S306

No ↓ Yes

TRANSMIT CONTENT — S307

UPDATE REQUEST MESSAGE — S708

TRANSFER REQUEST MESSAGE — S709

Yes ↓ IS CONTENT PRESENT? — S306

No ← Yes ↓

TRANSMIT CONTENT — S307

END

EP 3 232 332 B1

# Fig.16

```
                    ┌─────────────┐
                    │    START    │
                    └──────┬──────┘
                           │
                           ▼                    S305
        ┌──────────────────────────────────────┐
        │      RECEIVE REQUEST MESSAGE          │
        └──────────────────┬───────────────────┘
                           │
                           ▼                    S306
   No          ◇ IS CONTENT PRESENT? ◇
   ◄───────────
                          │ Yes
                          ▼                     S307
        ┌──────────────────────────────────────┐
        │          TRANSMIT CONTENT             │
        └──────────────────┬───────────────────┘
                           │
                           ▼                    S710
   Yes         ◇ RESPONSIBLE DEVICE? ◇
   ◄───────────
                          │ No
                          ▼                     S708
        ┌──────────────────────────────────────┐
        │       UPDATE REQUEST MESSAGE          │
        └──────────────────┬───────────────────┘
                           │
                           ▼                    S709
        ┌──────────────────────────────────────┐
        │      TRANSFER REQUEST MESSAGE         │
        └──────────────────┬───────────────────┘
                           │
                           ▼
                    ┌─────────────┐
                    │     END     │
                    └─────────────┘
```

# Fig.17

TERMINAL $N_2$

TERMINAL $N_3$

CONTENTS
$C_1$、$C_2$、$C_3$、$C_4$、$C_5$

TERMINAL $N_1$
CONTENTS
$C_3$、$C_5$

TERMINAL $N_4$
CONTENTS
$C_3$、$C_4$

REQUESTING TERMINAL $S_1$
CONTENTS
$C_1$

TERMINAL $N_5$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009054182 A
- US 2014237085 A

- JP 2014249058 A

**Non-patent literature cited in the description**

- **VAN JACOBSON ; MARK MOSKO ; DIANA SMETTERS ; JJ GARCIA-LUNA.** Content-centric networking. Palo Alto Research Center, 30 January 2007